(19) Europäisches Patentamt
European Patent Office
Office européen des brevets

(11) **EP 3 962 273 B1**

(12) **EUROPEAN PATENT SPECIFICATION**

(45) Date of publication and mention
of the grant of the patent:
**03.01.2024 Bulletin 2024/01**

(21) Application number: **20726170.2**

(22) Date of filing: **22.05.2020**

(51) International Patent Classification (IPC):
*A01N 37/44* (2006.01)    *A01N 63/00* (2020.01)
*A01P 3/00* (2006.01)    *A01N 63/34* (2020.01)
*A01N 63/38* (2020.01)    *A01N 63/30* (2020.01)
*A01N 63/32* (2020.01)

(52) Cooperative Patent Classification (CPC):
(C-Sets available)
**A01N 63/30; A01N 63/32; A01N 63/34; A01N 63/38**

(Cont.)

(86) International application number:
**PCT/EP2020/064313**

(87) International publication number:
**WO 2020/239633 (03.12.2020 Gazette 2020/49)**

(54) **COMPOSITION AND METHOD FOR ENHANCING SPORE GERMINATION AND BIOLOGICAL EFFICACY**

ZUSAMMENSETZUNG UND VERFAHREN ERHÖHUNG DER SPORENKEIMUNG UND DER WIRKSAMKEIT VON BIOLOGISCHEN BEKÄMPFUNGSMITTELN

COMPOSITION ET PROCÉDÉ PERMETTANT D'AMÉLIORER LA GERMINATION DE SPORES ET L'EFFICACITÉ D'UN AGENT DE CONTRÔLE BIOLOGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2019 EP 19176596**

(43) Date of publication of application:
**09.03.2022 Bulletin 2022/10**

(83) **Declaration under Rule 32(1) EPC (expert solution)**

(73) Proprietor: **DANSTAR FERMENT AG**
**6300 Zug (CH)**

(72) Inventors:
• **ROGALSKA, Selma**
**22397 Hamburg (DE)**
• **GOBLE, Tarryn**
**Kloof 3624 KwaZulu-Natal (ZA)**

(74) Representative: **J A Kemp LLP**
**80 Turnmill Street**
**London EC1M 5QU (GB)**

(56) References cited:
**EP-A1- 3 467 097    US-A1- 2013 031 673**
**US-A1- 2016 183 535    US-A1- 2016 183 537**
**US-A1- 2016 186 273**

• **J. CABREFIGA ET AL: "Improvement of fitness and efficacy of fire blight biocontrol agent", APPLIED AND ENVIRONMENTAL MICROBIOLOGY, vol. 77, no. 10, 25 March 2011 (2011-03-25), pages 3174-3181, XP055645848, US ISSN: 0099-2240, DOI: 10.1128/AEM.02760-10**
• **J. CABREFIGA ET AL: "Improvement of a dry formulation of Pseudomonas fluorescens EPS62e for fire blight disease biocontrol by combination of culture osmoadaptation with a freeze-drying lyoprotectant", JOURNAL OF APPLIED MICROBIOLOGY., vol. 117, no. 4, 5 July 2014 (2014-07-05), pages 1122-1131, XP055645851, GB ISSN: 1364-5072, DOI: 10.1111/jam.12582**

- J. M. CRANE ET AL: "Iturin Levels on Wheat Spikes Linked to Biological Control of Fusarium Head Blight by Bacillus amyloliquefaciens", PHYTOPATHOLOGY, vol. 103, no. 2, 1 February 2013 (2013-02-01), pages 146-155, XP055313883, US ISSN: 0031-949X, DOI: 10.1094/PHYTO-07-12-0154-R
- V. YANEZ-MENDIZABAL ET AL: "Formulation development of the biocontrol agent Bacillus subtilis strain CPA-8 by spray-drying", JOURNAL OF APPLIED MICROBIOLOGY., vol. 112, no. 5, 6 March 2012 (2012-03-06) , pages 954-965, XP055230197, GB ISSN: 1364-5072, DOI: 10.1111/j.1365-2672.2012.05258.x

(52) Cooperative Patent Classification (CPC): (Cont.)

C-Sets
A01N 63/30, A01N 37/44, A01N 63/32

**Description**

TECHNOLOGICAL FIELD

The present disclosure relates to compositions and methods for improving the ability of a population of biological agents or biological control agents to compete and survive in a field.

BACKGROUND

The use of natural organisms such as bacteria, viruses and fungi to control pests and diseases is of great interest. In particular, fungi are organisms with great potential as biological control agents because they have an extremely high reproductive capacity, a short generation time, and sometimes are very specific in their action, attacking only the host with which they have co-evolved. In addition, fungi have saprophytic phases in which they can survive without the host, and remain in the environment until the host appears again.

Biological solutions have been used, among other things, to promote plant growth, combat plant pathogens, reduce the use of chemicals for soil fertilization and pest management, and to increase nutrient availability and uptake to the plant. It is recognized that the use of these synthetic chemical agents are associated with problems such as non-target effects, environmental pollution, human health problems, as well as the high economic costs involved. However, such chemical agents continue to be in wide use due to their strong activity against important fungal diseases and limited availability of environmentally safer and effective alternatives. With the growing awareness of the harmful effects of many synthetic chemical pesticides on the environment as a whole, there has been a shift in attention to the research and development of more environment-friendly methods of pest and disease control.

EP3467097A1 describes use of compositions containing *Streptomyces melanosporofaciens* AGL225 in controlling plant diseases. Cabrefiga, J., et al. Applied and Environmental Microbiology 77.10 (2011): 3174-3181 describes improvement of efficacy of a fire blight biocontrol agent by nutritional enhancement combined with osmoadaptation. Cabrefiga, J., et al. Journal of applied microbiology 117.4 (2014): 1122-1131 describes improvement of a dry formulation of *Pseudomonas fluorescens* EPS62e for fire blight disease biocontrol by combination of culture osmoadaptation with a freeze-drying lyoprotectant. US 2016/183537 describes compositions containing *Bacillus amyloliquefaciens* RTI472 for benefiting plant growth and treating plant disease.

Unfortunately, biological solutions can sometimes be limited, for example, in their ability to colonize plant tissue or survive under field conditions. Therefore, efforts to apply certain live biological organisms have been limited by the insufficient ability of these biological microorganisms to germinate on minimal carbon source substrates (e.g., a plant tissue following an application of a biological control organism). By remaining in the dormant spore state, such biological microorganisms are unable to perform their beneficial modes of action. A greater germination of such spores or conidia would enable the organisms to regain metabolic activity, and thereby, increase the effectiveness of these biological solutions by colonizing the plant tissue. This greater germination rate can also prevent inactivation or reduction by abiotic factors. Therefore, there is a need in the state of the art to develop an alternative environmentally safe and effective solution to enhance the global efficacy of a biological control agent. This remains a long-standing need in the agricultural industry compared to the hazardous chemicals currently in use.

SUMMARY OF THE INVENTION

The scope of the invention is defined by the claims. Any aspects, embodiments and examples of the present disclosure which do not fall under the scope of the appended claims do not form part of the invention and are merely provided for illustrative purposes. The present disclosure is useful for enhancing the competitiveness of biological agents or biological control agents particularly over other microbial agents. Therefore, the protection from disease-causing agents or pests (e.g. insect pests) is enhanced.

The present disclosure relates to combinations, compositions and methods for improving the ability of a population of biological agents or biological control agents to compete and survive in a field. By improving the population of biological agents or biological control agents, the population of agents is able to grow, compete with other microbial strains and fungi, and provide a greater protection for pathogens or pests, as for example, plant pathogens or insects.

The present disclosure also relates to a composition comprising one or more microorganisms and germinants as well as methods comprising application of the composition to promote faster spore germination of the one or more microorganisms on a substrate or host not optimal for microbial growth and, thus, provide a greater protection against pathogens or pests, as for example, plant pathogens or insects.

Thus, the present invention provides a method for enhancing the germination rate of a microbial spore comprising contacting to a host: (a) one or more fungal spores of a biological agent or biological control agent, wherein the one or more fungal spores belong to the genus *Chlonostachys, Beauveria, Cordyceps, Serendipita,* or *Trichoderma,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof. Upon contact of the one or more microbial spores and the one or more germinants to the host, the one or more microbial spores of the biological agent or biological control agent may exhibit an increased spore germination compared to contacting one or more microbial spores to the host without the one or more germinants. The microbial spores of the invention are fungal spores. The host may be soil, a pest, a plant or a plant part, optionally wherein the plant part comprises or consists of a seed.

The present invention also provides a method for:

controlling a plant pathogen or a pest or protecting a plant from a plant pathogen or a pest wherein the plant pathogen is a fungus or the pest is an insect pest , said method comprising contacting soil, a pest, a plant or a plant part with (a) one or more fungal spores of a biological agent or biological control agent, wherein the one or more fungal spores belong to the genus *Chlonostachys, Beauveria,* or *Cordyceps,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof; or

improving growth, development and/or productivity of a plant, said method comprising contacting soil, a pest, a plant or a plant part with (a) one or more fungal spores of a biological agent or biological control agent, wherein the one or more fungal spores belong to the genus *Serendipita,* or *Trichoderma,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof.

The present invention further provides a method for enhancing the efficacy of a biological agent or biological control agent, said method comprising contacting soil, a pest, a plant or a plant part with (a) one or more fungal spores of a biological agent or biological control agent, wherein the one or more fungal spores belong to the genus *Chlonostachys, Beauveria, Cordyceps, Serendipita,* or *Trichoderma,* and combinations thereof, and (b) one or more germinants, wherein said one or more germinants comprises glycine betaine, a yeast extract, a yeast derivative, or a combination thereof. Upon contact of the one or more fungal spores and the one or more germinants to soil, the pest, the plant or the plant part, the one or more fungal spores of the biological control agent may exhibit an improved efficacy in inhibiting plant pathogens or exhibit an increased pest control compared to contacting one or more fungal spores to the host without the one or more germinants or the one or more fungal spores of the biological agent exhibits improved efficacy in improving plant growth, development and/or productivity. The improving the growth, development and/or productivity of a plant may comprise improving at least one of the following: the degree of mycorrhization, the rooting of the plant, the growth of the plant, the height of the plant, the flowering of the plant, the fresh biomass of the plant, the dry biomass of the plant, the yield of the plant, the nutrition of the plant, the resistance of the plant to abiotic stresses, and combinations thereof. The plant part may comprises or consist of a seed. The contacting may comprise foliarly applying to the plant or plant part the one or more microbial spores of a biological control agent and the one or more germinants.

Further provided by the present invention is a method for manufacturing a composition which comprises mixing (a) one or more fungal spores of a biological agent or biological control agent, wherein the one or more fungal spores belong to the genus *Chlonostachys, Beauveria, Cordyceps, Serendipita,* or *Trichoderma,* and combinations thereof and (b) one or more germinants to obtain a composition comprising (a) the one or more fungal spores of a biological agent or biological control agent and (b) the one or more germinants, wherein said one or more germinants comprises glycine betaine, a yeast extract, inactive yeast, yeast cell walls, a yeast cell wall fraction, a yeast cell wall product, or a combination thereof. Said method may further comprise mixing the (a) one or more fungal spores of a biological agent or biological control agent and (b) one or more germinants with (c) a carrier to obtain a composition comprising (a) the one or more fungal spores of a biological agent or biological control agent, (b) the one or more germinants and (c) the carrier. Said composition may be for controlling a plant pathogen or a pest or improving growth, development and/or productivity of a plant.

The present invention additionally provides a composition for controlling a plant pathogen or a pest or improving growth, development and/or productivity of a plant, wherein the composition comprises (a) one or more fungal spores of a biological agent or biological control agent, wherein the one or more fungal spores belong to the genus *Chlonostachys, Beauveria, Cordyceps, Serendipita,* or *Trichoderma,* and combinations thereof; and (b) one or more germinants, wherein said one or more germinants comprises glycine betaine, a yeast extract, inactive yeast, yeast cell walls, a yeast cell wall fraction, a yeast cell wall product, or a combination thereof; optionally further comprising (c) a carrier.

The present invention further provides use of an effective amount of (a) one or more fungal spores of a biological agent or a biological control agent, wherein the one or more fungal spores belong to the genus *Chlonostachys, Beauveria, Cordyceps, Serendipita,* or *Trichoderma,* and combinations thereof, and (b) one or more germinants for enhancing the germination rate of the one or more fungal spores of a biological agent or a biological control agent, wherein said one or more germinants comprises glycine betaine, a yeast extract, inactive yeast, yeast cell walls, a yeast cell wall fraction, a yeast cell wall product, or a combination thereof. The use may enhance the germination rate of the one or more fungal spores of a biological agent or biological control agent thereby controlling a plant pathogen or pest or improving growth, and development and/or productivity of a plant. The use may enhance the germination rate and antimicrobial activity or pesticidal activity of the one or fungal spores of the biological control agent compared to the germination rate and antimicrobial activity or pesticidal activity of the one or more fungal spores of a biological control agent when used without the one or more germinants. The use may enhance the germination rate and the efficacy in improving the plant growth, development and/or productivity of the one or more fungal spores of the biological agent compared to the germination rate and the efficacy in improving plant growth, development and or productivity of the one or more spores of the biological control agent when used without the one or more germinants.

In any of the above-described methods, compositions or uses of the present invention, the one or more germinants may comprise glycine betaine. In any of the above-described methods, compositions or uses of the present invention, the one or more germinants may comprise a yeast extract or a yeast derivative. Preferably, the one more germinants comprises a yeast extract. In any of the above-described methods, compositions or uses of the present invention, the one or more germinants may comprise a combination of glycine betaine and a yeast extract. Preferably, the one or more germinants comprises a combination of glycine betaine and a yeast extract.

In any of the methods, compositions or uses of the present invention, the one or more microbial spores of a biological agent or a biological control agent are one or more fungal spores.

The one or more fungal spores may be one or more fungal spores of *Chlonostachys rosea* var. *catenulatum, Beauveria bassiana, Cordyceps javanica, Trichoderma asperellum,* or combinations thereof. The one or more fungal spores may be one or more entomopathogenic fungal spores. The one or more entomopathogenic fungal spores may be one or more entomopathogenic fungal spores of *Beauveria bassiana, Cordyceps javanica,* or combinations thereof. The one or more fungal spores may be one or more conidia or chlamydospores. The one or more fungal spores may be one or more fungal spores of *Chlonostachys rosea* var. *catenulatum.* Preferably, the *Chlonostachys rosea* var. *catenulatum* is *C. rosea f. catenulate.* More preferably, the *C. rosea f. catenulate is C. rosea f. catenulate* strain J1446, which was deposited on 19 May 1994 according to the Budapest Treaty under accession number DSM 9212 at the DSM Leibniz Institute DSMZ - German Collection of Microorganisms and Cell Cultures (Inhoffenstr. 7B, D-38124 Braunschweig, Germany).

In specific embodiments of any of the above-described methods, compositions or uses of the present invention: (i) the one or more microbial spores of a biological control agent are one or more spores of *C. rosea f. catenulata* and the one or more germinants comprises glycine betaine, optionally the *C. rosea f. catenulata* is strain J1446; (ii) the one or more microbial spores of a biological control agent are one or more spores of *C. rosea f. catenulata* and the one or more germinants comprises a yeast extract or a yeast derivative, preferably the one or more germinants comprises a yeast extract, and optionally the *C. rosea f. catenulata* is strain J1446; (iii) the one or more microbial spores of a biological control agent are one or more spores of *C. rosea f. catenulata* and the one or more germinants comprises a combination of glycine betaine and a yeast extract or a yeast derivative, preferably the one or more germinants comprises a combination of glycine betaine and a yeast extract, and optionally the *C. rosea f. catenulata* is strain J1446; (iv) the one or more microbial spores of a biological control agent are one or more spores of *Beauveria bassiana* and the one or more germinants comprises glycine betaine; (v) the one or more microbial spores of a biological control agent are one or more spores of *Beauveria bassiana* and the one or more germinants comprises a yeast extract or a yeast derivative, preferably the one or more germinants comprises a yeast extract; (vi) the one or more microbial spores of a biological control agent are one or more spores of *Beauveria bassiana* and the one or more germinants comprises a combination of glycine betaine and a yeast extract or a yeast derivative, preferably the one or more germinants comprises a combination of glycine betaine and a yeast extract; (vii) the one or more microbial spores of a biological control agent are one or more spores of *Cordyceps javanica* and the one or more germinants comprises glycine betaine; (viii) the one or more microbial spores of a biological control agent are one or more spores of *Cordyceps javanica* and the one or more germinants comprises a yeast extract or a yeast derivative, preferably the one or more germinants comprises a yeast extract; (ix) the one or more microbial spores of a biological control agent are one or more spores of *Cordyceps javanica* and the one or more germinants comprises a combination of glycine betaine and a yeast extract or a yeast derivative, preferably the one or more germinants comprises a combination of glycine betaine and a yeast extract; (x) the one or more microbial spores of a biological agent are one or more spores of *Trichoderma asperellum* and the one or more germinants comprises glycine betaine; (xi) the one or more microbial spores of a biological agent are one or more spores of *Trichoderma asperellum* and the one or more germinants comprises a yeast extract or a yeast derivative, preferably the one or more germinants comprises a yeast extract; or (xii) the one or more microbial spores of a biological agent are one or more spores of *Trichoderma asperellum* and the one or more germinants comprises a combination of glycine betaine and a yeast extract or a yeast derivative, preferably the one or more germinants comprises a combination of glycine betaine and a yeast extract.

In any of the above-described methods, compositions or uses of the present invention, the plant pathogen may be a fungus. In any of the above-described methods, compositions or uses of the present invention, the plant pathogen belongs to the genus *Botrytis, Erysiphe, Rhizoctonia, Venturia, Didymella, Fusarium, Pseudoidium, Podoshaera* and combinations thereof. The plant pathogen may belong to the genus *Botrytis,* preferably wherein the plant pathogen is *Botrytis cinerea.* The plant pathogen may belong to the genus *Erysiphe,* preferably wherein the plant pathogen is *Erysiphe necator.* The plant pathogen may belong to the genus *Rhizoctonia,* preferably wherein the plant pathogen is *Rhizoctonia solani, Rhizoctonia bataticola; Rhizoctonia fragariae; Rhizoctonia leguminicola* or *Rhizoctonia oryzae,* preferably wherein the plant pathogen is *Rhizoctonia solani.* The plant pathogen may belong to the genus *Venturia,* preferably wherein the plant pathogen is *Venturia inaequalis.* The plant pathogen may belong to the genus *Pseudoidium,* preferably wherein the plant pathogen is *Pseudoidium neolycopersici.* The plant pathogen belongs to the genus *Podoshaera,* preferably wherein the plant pathogen is *Podosphaera xanthii.*

In any of the above-described methods, compositions or uses of the present invention, the plant pathogen may be an insect pest. The inect pest may belong to the species *Diuraphis noxia, Bemisia argentifolii, Bemisia tabaci, Trialeurodes vaporariorum, Aleyrodes Ionicerae, Diaphorina citri, Euphyllura olivine, Aphis gossypii, Myzus persicae, Macrosiphum euphorbiae, Aulacorthum solani, Heliothrips haemorrhoidalis, Frankliniella occidentalis, Frankliniella schulzei, Thrips tabaci, Scirtothrips dorsalis, Hercinothrips femoralis, Dalbulus maidis, Phenacoccus solenopsis, Pseudococcus longispinus, Paracoccus marginatus, Mahanarva fimbriolata, Deois flavopicta, Zulia entreriana, Notozulia entreriana, Hypothenemus hampei, Hedypathes betulinus, Cosmopolites sordidus, Gonipterus scutellatus, Agriotes spp., Plutella xyllostella, Helicoverpa armigera, Otiorhyncus sultacus, Fungus gnats, Exomala orientalis, Sciaridae, Otiorhynchus sulcatus, Strophosoma melanogrammum, S. capitatum, Phyllopertha horticola, Amphimallon solstitialis, Daktulosphaira vitifoliae, Diabrotica virgifera, Spodoptera spp, Oligonychus ilicis, Planococcus citri, Anthonomus grandis, Brevicoryne brassicae* or *Sphenophorus levis.*

In any of the above-described methods, compositions or uses of the present invention, the pest may belong to the species *Bemisia tabaci, Bemisia argentifolii, Trialeurodes vaporariorum, Hypothenemus hampei, Cosmopolites sordidus, Sphenophorus levis, Anthonomus grandis, Diaphorina citri, Helicoverpa armigera, Frankliniella occidentalis, Frankliniella schulzei, Thrips tabaci, Aphis gossypii, Myzus persicae, Oligonychus ilicis, Planococcus citri, Mahanarva fimbriolata, Agriotes spp, Diabrotica spp* or *Dalbulus maidis.* Preferably, the pest is *Bemisia tabaci,* more preferably the pest is *Bemisia tabaci* (Gennadius) (Hemiptera: Aleyrodidae).

In any of the above-described methods, compositions or uses of the present invention, said (a) one or more microbial spores of a biological agent or biological control agent, and (b) one or more germinants may be used simultaneously, separately or sequentially. Preferably, said (a) one or more microbial spores of a biological agent or biological control agent; and (b) one or more germinants are used simultaneously.

In specifice embodiments of any of the above-described methods or uses of the present invention: (i) the one or more germinants comprises or consists of glycine betaine, and glycine betaine is applied to soil or to the host, plant or plant part at a concentration of at least 0.001 %, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%; (ii) the one or more germinants comprises or consists of a yeast extract or a yeast derivative, and the yeast extract or the yeast derivative is applied soil or to the host, plant or plant part at a concentration of at least 0.001%, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%; and/or (iii) the one or more microbial spores of a biological agent or a biological control agent is applied to soil or to the host, plant or plant part or the one or more microbial spores of a biological agent or a biological control agent at a concentration of at least about $1 \times 10^6$, about $1 \times 10^7$, about $1 \times 10^8$, about $1 \times 10^9$, about $1 \times 10^{10}$, about $1 \times 10^{11}$ or about $1 \times 10^{12}$ CFU/g.

In specific embodiments of any of the above-described compositions of the present invention: (i) the one or more germinants comprises or consists of glycine betaine, and the glycine betaine is present in the composition at a concentration of at least 0.001%, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%; (ii) the one or more germinants comprises or consists of a yeast extract or a yeast derivative, and the yeast extract or the yeast derivative is present in the composition at a concentration of at least about 0.001%, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%; and/or (iii) the one or more microbial spores of a biological agent or a biological control agent is present in the composition at a concentration of at least about $1 \times 10^6$, about $1 \times 10^7$, about $1 \times 10^8$, about $1 \times 10^9$, about $1 \times 10^{10}$, about $1 \times 10^{11}$ or about $1 \times 10^{12}$ CFU/g.

In any of the above-described methods, compositions or uses of the present invention, the plant or plant part may be cereals, maize, rice, grasses, sugarcane, leguminous plants, forage crop, oil- and protein-rich plants, vegetable crops, fruit trees, viticulture crops, urban crops, or ornamental crops.

In any of the above-described methods, compositions or uses of the present invention, the one or more germinants comprises glycine betaine, a yeast extract, inactive yeast, yeast cell walls, a yeast cell wall fraction, a yeast cell wall product, or a combination thereof. The one or more germinants may comprise or consist of a yeast extract, and the yeast extract may be a soluble yeast extract.

In any of the above-described methods, compositions or uses of the present invention, the one or more germinants may comprise or consist of a yeast derivative selected from inactive yeast, yeast cell walls, and combinations therof. The yeast cell walls may be be a yeast cell wall fraction, a yeast cell wall product, or a combination thereof.

FIGURES

Having thus generally described the nature of the invention, reference will now be made to the accompanying drawings, showing by way of illustration, a preferred embodiment thereof, and in which:

Figure 1 shows the percent germination rate of Prestop® 0.025% (*C. rosea* f. *catenulata* J1446 spores) in combination with glycine betaine (0.06% and 0.6%) or yeast extract (0.04% and 0.2%) on leaf discs over 24 hour period in comparison with the sole application of Prestop® 0.025%.

Figure 2 shows measurements of *C. rosea* f. *catenulata* J1446 final growth diameters from leaf discs cut after (a) 1 day, (b) 2 days (c) 3 days or (d) 6 days after inoculation in the greenhouse and a further 6 days of incubation on plates. Prestop® was applied at a concentration of 0.025%, glycine betaine at a concentration of 0.06% and 0.6% or yeast extract at a concentration of 0.04% and 0.2%.

Figure 3 shows the efficacy of the combination of Prestop® (*C. rosea* f. *catenulata* J1446) at a concentration of 0.003% and glycine betaine at a concentration of 0.05% and 0.2% in controlling *Botrytis cinerea* compared with treatments with only Prestop® and only glycine betaine.

Figure 4 shows the efficacy of a lower dose rate of Prestop® (*C. rosea* f. *catenulata* J1446) at a concentration of 0.001% in combination with glycine betaine (at a concentration of 0.06% or 0.08%) in controlling *Botrytis cinerea* compared to the sole application of Pretop® and glycine betaine.

Figure 5 shows the efficacy of Prestop® (*C. rosea* f. *catenulata* J1446) at a concentration of 0.7 g/L in combination with glycine betaine at a concentration of 0.5 g/L on the development of powdery mildew on vine cuttings compared to the application of water or the sole application of Prestop® and glycine betaine.

DETAILED DESCRIPTION

The present disclosure allows the increase of spore germination of biological agents or biological control agents and, thus, improving the ability of biological agents or biological control agents to compete and survive in a field setting. By stimulating or improving the population of biological agents or biological control agents, the population is able to grow, compete with other microbial organisms and provide a better protection for pathogens as, for example, plant pathogens or pests.

As the germination of spores constitutes the first step in the fungal colonization process, a faster and greater activation of germination will lead to a greater colonization (and also a greater sporulation and production of conidia) and establishment of beneficial fungi.

As known in the art, fungi may be used as biological agents or biological control agents. Indeed, spores are the main mechanism of inoculation of these fungi and therefore increasing the spore germination of fungal biological control agents allows, amongst other, for a greater or faster growth and colonization of the plant tissue. Indeed, soil, pest, plant parts or plant are not always an optimal substrate or host for microbial growth. Furthermore, the results of the present studies have allowed to link increased (or a greater) germination rate of microbial spore of a biological agent or biological control agent with improved, increased or enhanced biological activity or biological control activity.

The present disclosure is directed to a method for controlling a plant pathogen or a pest or protecting a plant or plant part against a plant pathogen or a pest comprising contacting a plant or plant part with (a) one or more microbial spores of a biological agent or biological control agent; and (b) one or more germinants as set out in the claims. Interestingly, the use of the one or more germinant of the present disclosure makes it possible to reduce the concentration of the biological agent or biological control agent (i.e. reduce the concentration of the one or more microbial spores) while demonstrating an effect comparable or superior to that observed when normal doses of biological agent or biological control agent are used.

The present disclosure also relates to a method for enhancing the germination of a microbial spore of a biological agent or biological control agent comprising contacting one or more microbial spores of a biological agent or biological control agent and one or more germinants to a host as set out in the claims, wherein upon contact of the one or more microbial spores and the one or more germinants to a host, the one or more microbial spores of the biological agent or the biological control agent exhibit increased spore germination on the host in the presence of the one or more germinants compared to contacting one or more microbial spores of the biological agent or biological control agent on a plant or plant part without the one or more germinants. As used herein, the term "host" means a plant material, soil, pests, insects or nematodes. In an embodiment, the host is a an insect, a mite, a plant or a plant part.

In a yet another aspect, a method for inducing the germination of a microbial spore is described herein. In one embodiment, the method comprises inducing the germination of a microorganism comprising foliarly applying or contacting one or more microbial spores and one or more germinants to a plant or plant part, wherein upon foliar application of the one or more microbial spores and the one or more germinants to a plant or plant part, the one or more microbial spores exhibit increased germination on the plant or plant part in the presence of the one or more germinants compared to the foliar application of one or more microbial spores alone (i.e., without one or more germinants) on a plant or plant part.

In another embodiment, the present disclosure provides a combination of components or a composition comprising (a) one or more microbial spores of a biological agent or biological control agent; and (b) one or more germinants, wherein said composition controls a plant pathogen or a pest. The (a) one or more microbial spores of a biological agent or biological control agent; and (b) one or more germinants are present in a form that can be delivered simultaneously, sequentially or separately from each other to a plant or plant part or a pest. By the term "combination" as used herein, this term means two or more substances in proximity to one another and/or used together, regardless of whether a carrier is included. The composition comprising (a) one or more microbial spores of a biological agent or biological control agent; and (b) one or more germinants may be considered a combination. As used herein, the term "delivering simultaneously" means that (a) one or more microbial spores of a biological agent or biological control agent; and (b) one or more germinants are delivered to a plant or plant part or a pest at the same time or substantially at the same time via the same mode of application. As used herein, the term "delivering separately" means that (a) one or more microbial spores of a biological agent or biological control agent; and (b) one or more germinants are delivered to a plant or plant part or a pest at the same time or substantially at the same time via a different mode of application. As used herein, the term "delivering sequentially" means that (a) one or more microbial spores of a biological agent or biological control agent; and (b) one or more germinants are delivered to a plant or plant part or a pest at different times (i.e. (a) can be before or after (b)), the mode of application being identical or different.

Alternatively, the combination of microbial spores of a biological agent or biological control agent and germinants of the present disclosure can be used to significantly reduce diseases or pests. More particularly, the present disclosure provides a use of an effective amount of (a) one or more microbial spores; and (b) one or more germinants for enhancing the germination of a microbial spore and thereby controlling a plant pathogen or a pest as set out in the claims.

As used herein, the term "biological agents", "biological control agent(s)" are all used interchangeably and means any biological organisms which has a biological activity in a seed, a plant, or a plant part or against a pest and/or capable of having one or more beneficial properties to a plant or a plant part (e.g. capable of promoting plant growth, capable of having fungicidal activity, capable of having pesticidal activity, etc). "Biological agents" or "biological control agents" of the present disclosure include microorganisms (e.g. fungi) that control disease-causing plant pathogens or pests (i.e. insects) and/or promote plant health, growth, and yield. Non-limiting examples of "biological activity" include N2 fixation, phosphate solubilization, plant growth-enhancement, pesticidal activity, bio-pesticidal (e.g. bioinsecticidal or bionematicidal) activity, bio-fungicidal activity, etc.

As used herein, the terms "control" or "controlling" refer to reduction in numbers of plant pathogens or pests, particularly insect pests, accomplished using the composition of the present disclosure. Concerning control of plant pathogens, the composition or method of the present disclosure is useful for imparting to plants protection against plant pathogens, to modulate, reduce, prevent or ameliorate an infection caused by a plant pathogen. Concerning the reduction of pests (e.g. insects), it is generally comprehended that it is the reduction in numbers or eradication of pests or inhibition of their rate of reproduction.

As used herein, the term "improved, increased or enhanced biological control activity (or efficiency) or fungicial activity (or efficiency) means that there is an improved or enhanced efficacy in the inhibition of plant pathogenic fungi (or fungal spores) or pests. Such improved inhibition includes, but is not limited to, a decreased growth of said pathogenic fungi, mycelium and/ or production of their spores or a reduction of pests as mentioned above. As used herein "improved, increased or enhanced biological control activity or efficacy" means that there is an improved, increased, enhanced or superior overall efficacy in biocontrol or biological control, such as in context with a biological control application in plants or against pests compared to the biological control efficacy of the biological control agent without the presence of the one or more germinants.

In the context of the present disclosure, the term "improved, increased or enhanced biological activity (or enhance a biofertilization ativity)" means increased plant yield or increased the growth of plants, the height of plants (e.g., increased biomass (the fresh biomass and/or the dry biomass), the flowering, increased fruit number, increased bolls, increased seed number or size, or a combination thereof as measured by any methods known in the art), increased root number, increased root mass, increased root volume, increased leaf area, increased plant stand, increased plant vigor, faster seedling emergence (i.e., enhanced emergence), faster germination, (i.e., enhanced germination), increased the degree of mycorrization, the nutrition, the resistance to abiotic stress, or combinations thereof. Mycorrhizal fungi and, for example, the fungus *Trichoderma* (e.g. *T. asperellum* (an example is the product Quality@, Lallemand) have this ability to promote or stimulate plant growth, plant development or plant health.

The biological control agent is a fungal biological control agent. The fungal biological control agent(s) of the invention are as recited in the claims. Particular fungal microorganisms of interest include strains of the *Chlonostachys, Beauveria, , Cordyceps, Serendipita* or *Trichoderma*

In the context of the present disclosure, the biological control agent may be the fungus *C. rosea.* Any species or strains of *C. rosea* may be used. Indeed, many isolates of *C. rosea* are highly efficient antagonists against several plant pathogenic fungi. The biological control agent C. *rosea* is an antagonistic fungal plant pathogen that is widely present in soil and can produce a series of antibacterial metabolites. In an embodiment, *C. rosea* is *C. rosea f. catenulata.* In a further embodiment, the fungus is *C. rosea* f. *catenulata* J1446. This strain has been deposited on 19 May 1994 according to the Budapest Treaty to the DSM depositary (DSM Leibniz Institute DSMZ - German Collection of Microorganisms and Cell Cultures (Inhoffenstr. 7B, D-38124 Braunschweig, Germany) under the accession number DSM 9212. *C. rosea f. catenulata* J1446 is commercially available under the trademark PRESTOP® or LALSTOP G46 (Lallemand (Verdera, Finland)). In an embodiment, the one or more microbial spores is an entomopathogenic fungal spores. In another particular embodiment, the one or more entomopathogenic fungal spores (e,.g. conidia) are one or more entomopathogenic fungal spores of *Beauveria* (e.g. *B. bassiana* (an example is the product Granada® from Lallemand) or *Cordyceps* (e.g. *C. javanica*) can also be used in the context of the present disclosure.

As used herein, the terms "spore" or "microbial spore" has its normal meaning which is well known and understood by those of skill in the art. As used herein, the terms "spore" and "microbial spore" mean a microorganism in its dormant, protected state. In the context of the present disclosure, the term "one or more microbial spores" refers to "one or more microbial spores" of a biological control agent. In a preferred embodiment, the term "one or more microbial spores" refers to one or more fungal spores. In a particular embodiment, fungal spores include sexually (e. g. oospores, zygospores or ascospores) and asexually (e.g. conidia, chlamydospores, blastospores, uredospores, teleutospores and ustospores) formed spores. The "fungal spores" also include mycelium or mycelium fragments. In a particular embodiment, the fungal spores are conidia. In a particular embodiment, the fungal spores are chlamydospores.

As used herein, the term "germinant(s)" or "inducer(s)" means any substance or compound that induces increases or enhances the germination rate of microbial spores of biological agents or biological control agent e.g., a substance or compound that induces the germination of a microbial spore of biological agents or biological control agent, such as a fungal spore and allows a greater colonization and efficacy of the biological agents or biological control agents. In an embodiment, the "germinant(s)" or "inducer(s)" of the present disclosure can also increase sporulation. The "germinant(s)" or "inducer(s)" of the present disclosure can be seen as having a prebiotic activity. Prebiotics are defined as substances that selectively stimulate microorganisms providing a beneficial effect on the health of the host and competitive advantage. This definition can be extended both for use in human health, the food industry and for application in agriculture since these are a group of compounds based on vitamins, minerals, amino acids and proteins that can act by stimulating the growth and activity of microorganisms.

In the context of the present disclosure, examples of germinants of fungal biological control agent are glycine betaine, yeast extracts, or a combination thereof.

In an embodiment, the germinant used in the context of the present disclosure is glycine-betaine. Glycine-betaine extracted from sugar beet is commercially available for example under the trademark of IntraCell®, Greenstim®, Bluestim®, Osmopro® or LALSTIM Osmo® (Lallemand). Other betaine products, such as betaine monohydrate, betaine hydrochloride and raw betaine liquids, are also commercially available and they can be used for the purposes of the present disclosure.

All types of commercially available yeast extract or yeast derivatives may be used in the context of the present invention. The term "yeast fraction" encompasses substances obtained by separation of the cell walls (e.g. the shells) from the rest of the yeast cell. The term "yeast cell wall" corresponds to the shells of the yeast cells with the exclusion of the content of the yeast cells. The "yeast extract" corresponds to the content of the yeast cells with the exclusion of the cell walls (e.g. the shells). More particularly, the term "yeast extract" refers to the content of the yeast cells, said content being obtained by any suitable extraction method known to those skilled in the art. Thus, more particularly, the term "yeast extract" encompasses the water soluble components of the yeast cell. Generally, yeast extracts are produced by (a) subjecting a yeast to autolystate; (b) subjecting the autolysate to solid/liquid separation; and (c) recovering the liquid fraction, i.e. a soluble yeast extract. Preferably, the yeast extract used in the context of the present invention is a soluble yeast extract. The term "inactive yeast" encompasses yeasts that have been killed by any physical, chemical or physicochemical process. Most commonly, yeasts are killed by heat shock at the end of the production process and then dried. The term "yeast derivatives" covers inactive yeast, yeast cell wall fraction or yeast cell wall products. The yeast extract or the yeast derivative (e.g. the yeast cell walls or the inactive yeast) used in the present invention can be from any yeast species, preferably a yeast species of the genus *Saccharomyces, Kluyveromyces, Candida* or *Torula*. In preferred embodiments of any of the methods, compositions or uses of the present invention, the yeast extract is a soluble yeast extract and is from *S. cerevisiae.*

As used herein, the terms "increased germination", "increased germination rate", "enhanced germination" and variations thereof, is intended to mean: an increase in the proportion of applied spores that germinate in the presence of a germinant when compared to the proportion of applied spores that germinate in the absence of a germinant; and/or an increase in speed by which applied spores germinate in the presence of a germinant when compared to the speed by which applied spores germinate in the absence of a germinant.

As used herein, the terms "plant(s)" and "plant part(s)" means all plants and plant populations such as desired and undesired wild plants or crop plants (including naturally occurring crop plants). Plant parts are to be understood as meaning all parts and organs of plants above and below the ground, such as shoot, leaf, flower and root, examples which may be mentioned being leaves, needles, stalks, stems, flowers, fruit bodies, fruits, seeds, roots, tubers and rhizomes. The plant parts also include harvested material and vegetative and generative propagation material (e.g., cuttings, tubers, rhizomes, off-shoots and seeds, etc.). The combination of the present disclosure may be applied to any types of plants (i.e. to both leguminous or non-leguminous plants). Examples of plants include, but are not limited to, cereals (such as wheat, barley, oat, rye, triticale), maize, rice, grasses, sugarcane, cotton, leguminous plants (such as alfalfa, clover, sainfoin, etc.), forage crop (such as ryegrass, fescues, cocksfoot, festulolium, vetch, forage turnips, forage radishes, etc.), oil- and protein-rich plants (such as soybeans, colza, peas, fava beans, white lupin, sunflower, etc.), vegetable crops (such as tomatoes, lettuce, cucumbers, bell peppers, eggplants, zucinnis, etc.), fruit trees or fruit bushes (such as, strawberries, blueberries, raspberries, etc.), viticulture (wine and table grapes) or urban and ornamental trees and crops (such as flower production, turfgrass, nurseries, etc.).

As used herein, the terms "controlling a plant pathogen", "controlling a pest", "controlling an insect pest","protecting a plant from a pathogen (as a plant pathogen, a pest or an insect pest)" refers to one or more of inhibiting or reducing the growth, germination, reproduction, and/or proliferation of a pathogen (e.g. a plant pathogen or an insect pest) of interest; and/or killing, removing, destroying, or otherwise diminishing the occurrence and/or activity of a pathogen of interest. As outlined in further detail herein, in specific embodiments, the biological control agent controls one or more pathogenic fungi such as, for example, *Botrytis* spp. (e.g. *B. cinerea), Didymella* spp., *Pythium* spp., *Phytophthora* spp., *Fusarium* spp., *Rhizoctonia* spp. (e.g. *Rhizoctonia solani, Rhizoctonia bataticola; Rhizoctonia fragariae, Rhizoctonia leguminicola or Rhizoctonia oryzae), Verticiliium* spp., *Cladosporium* spp., *Verticiliium* spp., *Podosphaera* spp., *Cladosporium* spp., *Sclerotinia* spp. (e.g. *S. sclerotiorum), Alternaria* spp., *Monilia* spp., *Monilinia* spp., *Colletotrichum* spp., *Cladosporium* spp., *Oidium* spp. *Didymella* spp., *Microdochium* spp., *Mycosphaerella spp., Puccinia* spp., *Septoria* spp., *Phaeosphaeria* spp., *Tapesia* spp., *Gaeumannomyces* spp., *Cochliobolus* spp. *Stagonospora* spp., *or Pseudoidium spp..* The following pathogens can be also encompassed by the present disclosure: *Oidium anacardii, Oidium lycopersici, Erysiphe betae, Oidium ericinum, Leveillula taurica, Golovinomyces cichoracearum, Podosphaera fusca, Leveillula taurica, Podosphaera myrtillina, Podosphaera spiraeae, Oidium neolycopersici, Sphaerotheca verbenae, Erysiphe necator (Uncinula necator), Erysiphe viburni, Erysiphe hedwigii, Podosphaera tridactyla, Microsphaera penicillata, Podosphaera clandestina, Podosphaera euphorbiae, Oidium heveae, Microsphaera polonica, Oidium dianthii, Neoerysiphe galeopsidis, Oidium tingitaninum, Microsphaera berberidis, Golovinomyces cynoglossi, Blumeria graminis, Erysiphe lonicerae, Erysiphe cruciferarum, Golovinomyces orontii, Leveillula cucurbitacearum, Podosphaera fusca (syn. Sphaerotheca fuliginea), Microsphaera begoniae, Plasmapora viticole, Phytophtora infentans Venturia inaequalis, Pseudoidium neolycopersici* or *Podosphaera xanthii.*

In another embodiment, the composition, combination or method of the present disclosure can control pests such as insect pests. Examples of insect pests are acari, hemipterous, homoterous pests, thysanopterous pests, isopterous pests, lepidopterous pests, coleopterous pests, orthopterous pests, hymenopetrous pests or dipterous pests, etc.

The entomopathogen fungal spores of the present disclosure can control, for examples, insect pest belonging to the species *Diuraphis noxia, Bemisia argentifolii, Bemisia tabaci, Trialeurodes vaporariorum, Aleyrodes lonicerae, Diaphorina citri, Euphyllura olivine, Aphis gossypii, Myzus persicae, Macrosiphum euphorbiae, Aulacorthum solani, Heliothrips haemorrhoidalis, Frankliniella occidentalis, Frankliniella schulzei, Thrips tabaci, Scirtothrips dorsalis, Hercinothrips femoralis, Dalbulus maidis, Phenacoccus solenopsis, Pseudococcus longispinus, Paracoccus marginatus, Mahanarva fimbriolata, Deois flavopicta, Zulia entreriana, Notozulia entreriana, Hypothenemus hampei, Hedypathes betulinus, Cosmopolites sordidus, Gonipterus scutellatus, Agriotes* spp., *Plutella xyllostella, Helicoverpa armigera, Otiorhyncus sultacus, Fungus gnats, Exomala orientalis, Sciaridae, Otiorhynchus sulcatus, Strophosoma melanogrammum, S. capitatum, Phyllopertha horticola, Amphimallon solstitialis, Daktulosphaira vitifoliae, Diabrotica virgifera, Spodoptera spp, Oligonychus ilicis, Planococcus citri, Anthonomus grandis, Brevicoryne brassicae* or *Sphenophorus levis.* In an embodiment, the pests belongs to the species *Bemisia tabaci* (Gennadius) (Hemiptera: Aleyrodidae), *Bemisia argentifolii, Trialeurodes vaporariorum, Hypothenemus hampei, Cosmopolites sordidus, Sphenophorus levis, Tetranychus urticae, Anthonomus grandis, Diaphorina citri, Helicoverpa armigera, Frankliniella occidentalis, Frankliniella schulzei, Thrips tabaci, Aphis gossypii, Myzus persicae, Oligonychus ilicis, Planococcus citri, Mahanarva fimbriolata, Agriotes spp, Dia-*

*brotica spp or Dalbulus maidis.*

The combination or composition according to the present disclosure can be applied by contacting plant, plant part, soil or a pest by any means known to the artisan skilled in the art. The term "contacting" as used herein means causing a plant, plant part, soil or a pest to come into proximity with an exogenous liquid or solid (such as a powder) form of a combination or composition according to the disclosure. Examples of such methods include, but are not limited to dipping, immersing, spraying, misting, fogging, coating, dusting or soaking application methods. The application forms and methods depend entirely on the intended purposes in order to ensure the finest and uniform distribution of the one or more microbial spores of a biological agent or biological control agent and one or more germinants onto the plant or plant part, soil or pests. In an embodiment, the application or contacting step is repeated more than one (i.e. that the contacting step may be repeated twice, three times, four times, five times, six times, etc).

In a more particular embodiment, the method for inducing germination of a microbial spore comprises foliarly applying one or more spores and one or more germinants to plant foliage. In still another embodiment, the method for inducing germination of a microbial spore comprises foliarly applying one or more compositions described herein. The method may further comprise subjecting the plant or plant part to one or more agriculturally beneficial ingredients, applied simultaneously or sequentially with the one or more microbial spores or one or more germinants. In one embodiment the one or more agriculturally beneficial ingredients are applied simultaneously or sequentially with the one or more microbial spores. In another embodiment the one or more agriculturally beneficial ingredients are applied simultaneously or sequentially with the one or more germinants.

In another embodiment, a method for treating soil is also described herein. In one embodiment, the method comprises contacting a soil with one or more microbial spores and one or more germinants. In another embodiment, the method comprises contacting a soil with one or more microbial spores and one or more germinants, and growing a plant or plant part in the treated soil. In still yet another embodiment, the method comprises contacting a soil with one or more of the compositions described herein, and growing a plant or plant part in the treated soil. In an embodiment, the contacting step can be performed by any method known in the art. Non-limiting examples of contacting the soil include spraying the soil, drenching the soil, dripping onto the soil, sprenching, in-furrow sprays, pellets, microgranules, and/or dusting the soil. In one embodiment, the contacting step is repeated (e.g., more than once, as in the contacting step is repeated twice, three times, four times, five times, six times, etc.). In one embodiment, the contacting step comprises contacting the soil with one or more microbial spores sequentially with one or more germinants. In another embodiment, the contacting step comprises contacting the soil with one or more microbial spores or conidida simultaneously with one or more germinants. In a particular embodiment, the contacting step comprises introducing one or more of the compositions described herein to the soil.

The contacting step can occur at any time during the growth of the plant or plant part. In one embodiment, the contacting step occurs before the plant or plant part begins to grow. In another embodiment, the contacting step occurs after the plant or plant part has started to grow. In another embodiment, the contacting step with pests (e.g. insects) can occur at any stage in their development. For example, developmental stages such as, for example, eggs, nymphs, larvae pupae and adults may be targetted at low, medium and high infestation levels.

In another embodiment, the method further comprises the step of planting a plant or plant part. The planting step can occur before, after or during the contacting step. In one embodiment, the planting step occurs before the contacting step. In another embodiment, the planting step occurs during the contacting step (e.g., the planting step occurs simultaneously with the contacting step, the planting step occurs substantially simultaneous with the contacting step, etc.). In still another embodiment, the planting step occurs after the contacting step.

In another aspect, seeds may be treated with one or more microbial spores and one or more germinants according to any method known in the art. In a particular embodiment, seeds may be treated with one or more of the compositions described herein. In yet another embodiment, the compositions described herein are formulated (e.g., mixed, added, etc.) with a any seed treatment mixture. Coating of the seed may occur, for example, via spraying or dripping.

The combination of the present disclosure is applied in an effective amount. An effective amount of a one or more microbial spores of a biological control agent and one or more germinants is an amount sufficient to control or inhibit the pathogens. In other embodiments, the effective amount of a one or more microbial spores and one or more germinants is an amount sufficient to induce spore germination of the one or more microorganisms (i.e. of the one or more microbial spores of the biological control agent). The actual effective dosage in absolute value depends on factors including, but not limited to, synergistic or antagonistic interactions between the other active or inert ingredients which may enhance or reduce the germinating effects of the one or more germinants, and the stability of the one or more germinants in compositions and/or as plant or plant part treatments. The rate of application of the one or more microbial spores of a biological control agent and one or more germinants may vary according to the pathogen being targeted, the crop to be protected, the severity of the disease, the climate conditions, and the like. In some cases the combination of the microbial spores of a biological control agent and the germinants may show synergistic activity, where the combination of the two exceeds that expected from their simple additive effect.

For example, the one or more microbial spores of a biological agent or biological control agent (e.g. *C. rosea, B. bassiana, C. javanica* or *T. asperellum*) of the present disclosure are formulated as a liquid suspension or in a dry powder according to any suitable methods known in the art. The biologically pure culture, suspension or formulation (comprising, but not limited to, conidia, mycelium fragments and spores) is applied to the soil, pest, plant or plant part at a concentration of between about $10^3$ to $10^{12}$ cfu ("colony forming unit")/ml, about $10^4$ to $10^{11}$ cfu/ml, about $10^5$ to $10^{10}$ cfu/ml or about $10^6$ to $10^9$ cfu/ml. The one or more microbial spores of a biological control agent (e.g. *C. rosea B. bassiana, C. javanica* or *T. asperellum*) is applied to the soil, pest, plant or plant part in a liquid suspension or is present in a composition or combination at a concentration of about $1\times10^4$, about $1\times10^5$, about $1\times10^6$, about $1\times10^7$, about $1\times10^8$, about $1\times10^9$, about $1\times10^{10}$, about $1\times10^{11}$, about $1\times10^{12}$, about $1\times10^{13}$ cfu/ml or greater than $1\times10^{13}$ cfu/ml. The one or more microbial spores of a biological agent or biological control agent (e.g. *C. rosea, B. bassiana, C. javanica or T. asperellum*) can also be applied to the soil, pest, plant or plant part in a dry formulation (comprising, but not limited to, conidia, mycelium fragments and spores) at a concentration of between about $10^3$ to $10^{12}$ cfu/g, about $10^4$ to $10^{11}$ cfu/g, about $10^5$ to $10^{10}$ cfu/g or between $10^6$ to $10^9$ cfu/g. The one or more microbial spores of a biological agent or biological control agent (e.g. *C. rosea, B. bassiana, C. javanica or T. asperellum*) can also be applied to the soil, pest, plant or plant part in a dry formulation at a concentration of about $1\times10^4$, about $1\times10^5$, about $1\times10^6$, about $1\times10^7$, about $1\times10^8$, about $1\times10^9$, about $1\times10^{10}$, about $1\times10^{11}$, about $1\times10^{12}$, about $1\times10^{13}$ cfu/ml or greater than $1\times10^{13}$ cfu/g. The optimal amount can vary depending upon crop species, plant pathogens or pests and can be readily determined by those skilled in the art.

In an embodiment, the glycine betaine is applied to a plant or plant part or the amount of glycine betaine in the composition or the combination is at a concentration of at least 0.001 %, 0.005%, 0.01%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or more than 5%, 5.5%, 6%, 6.5%, 7%, 7.5%, 8%, 8.5%, 9%, 9.5%, or more than 10%. In a preferred embodiment, the glycine betaine is applied at a concentration of at least 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%.

In an embodiment, the yeast extract is applied to a plant or plant part or the amount of yeast extract in the composition or the combination is at a concentration of at least 0.001 %, 0.005%, 0.01%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or more than 5%, 5.5%, 6%, 6.5%, 7%, 7.5%, 8%, 8.5%, 9%, 9.5%, or more than 10%. In a preferred embodiment, the yeast extract is applied at a concentration of at least 0.05%, 0.06%, 0.07%, 0.08%, 0.09%, 0.1%, 0.2%, 0.3%, 0.4%, 0.5%, 0.6%, 0.7%, 0.8%, 0.9% or 1%.

In some embodiments, Colby's formula is applied to determine whether using (a) and (b) in combination shows a synergistic effect: S. R. Colby, Calculating Synergistic and Antagonistic Responses of Herbicide Combinations, WEEDS 15, p. 20-22 (1967).

The following equation is used to calculate the expected activity of mixtures containing two active ingredients, A and B:

$$Expected = A + B - (A \times B/100)$$

wherein

A=observed efficacy of active component A (e.g. one or more microbial spores of a biological control agent and more particularly, one or more C. *rosea* f. *catenulatum* spores) at the same concentration as used in the mixture;

B=observed efficacy of active component B (e.g. glycine betaine and/or yeast extract) at the same concentration as used in the mixture.

E=expected effect (in percent, %) of (a) + (b) at application rates a and b.

In the Colby equation, the value E corresponds to the effect (plant damage or injury) that is to be expected if the activity of the individual compounds is additive. If the observed effect is higher than the value E calculated according to the Colby equation, then a synergistic effect is present according to the Colby equation.

In some embodiments, the combinations, compositions and methods disclosed herein are synergistic as defined by the Colby equation. In some embodiments, the joint action of C. *rosea* f. *catenulata* J1446 (i.e. the microbial spores of the biological control agent) and glycine betaine (i.e. the germinants) or yeast extract results in enhanced activity (via synergism) against a plant pathogen (as, for example, against *Botrytis, Rhizoctonia, Erysiphe* or *Venturia*). In an embodiment, the combinations, compositions and methods of the present disclosure show an enhanced antimicrobial (or, for example, antifungal) or pesticidal activity compared to the antimicrobial (or, for example, antifungal) or pesticidal activity of the components when applied individually. In a further embodiment, the combinations, compositions and methods of the present disclosure show a synergistically enhanced antimicrobial (or, for example, antifungal) or pesticidal activity compared to the antimicrobial or pesticidal activity (or, for example, antifungal) of the active components when applied individually. More particularly, it has been demonstrated that the use of the combination of *C. rosea* f. *catenulata* J1446 (i.e. the microbial spores of the biological control agent) and glycine betaine (i.e. the germinants) shows an enhanced antifungal activity compared to the antifungal activity of the components when applied individually. More particularly, it has been demonstrated that the use of the combination of *C. rosea* f. *catenulata* J1446 (i.e. the microbial spores of the biological control agent) and glycine betaine (i.e. the germinants) shows an enhanced activity against *Botrytis* compared to the activity of *C. rosea* f. *catenulata* J1446 or glycine betaine when applied individually. The combination of *C. rosea* f. *catenulata* J1446 (i.e. the microbial spores of the biological control agent) and glycine betaine (i.e. the germinants) increases the effectiveness of the protection against attack by plant pathogens by increasing the germination of the spores and, thus, by enhancing the fungal growth and colonization of the plant or plant part. In other words, the present disclosure demonstrates an enhanced efficacy of *C. rosea* f. *catenulata* J1446 in the biological control (or fungicidal activity) of pathogenic fungi (e.g. against *Botrytis, Rhizoctonia, Erysiphe* or *Venturia*) by increasing the spore germination rate of the fungus by using a germinant. In an embodiment, and as demonstrated in the example, the combination of the present disclosure provides synergistic activity in controlling said plant pathogen or pest.

In some embodiments, the combinations, compositions and methods disclosed herein can, based on the individual components, be used at lower application rates to achieve a fungicidal effect comparable to the effect produced by the individual components at normal application rates.

In an embodiment, the use of the combinations, composition or method of the present disclosure could also be effective to control insect pests and/or to increase the effectiveness of the protection against insect pests. For example, in this case, the one or more microbial spores of a biological control agent is selected for its ability against insects as, for example, the following biological agent controls: *Beauveria bassiana* sensu lato (Bals.) VuilL, B. *brongniartii* (Sacc.) Petch, *Isaria fumosorosea* Wise (formerly *Paecilomyces fumosoroseus*), *Isaria javanica (Cordyceps javanica)*, *Lecanicillium longisporum* and *L. muscarium* (Petch) R. Zare andW. Gams (formerly *Verticillium lecanii),* or *Nomuraea rileyi* (Farl.) Samson. For example, the results in the present disclosure demonstrate that glycine betaine, yeast extract or a combination thereof with *B. bassiana* or *C. javanica* present an enhanced or superior entomopathogenic activity as compared to the efficacy of the biological control agent without the germinant (i.e. glycine betaine, yeast extract or a combination thereof).

The combination or composition of the present disclosure may include a suitable carrier and/or diluent and may be provided in a form of a solid, a powder, a solution, dispersion, a suspension, a paste, an aerosol or a spray, wherein the active ingredients of the present disclosure are formulated in a manner which suits the specific application. Non-limiting examples of suitable, formulations are: emulsion concentrates, suspension concentrates, water dispersible granule and wettable powders. The carrier or diluent, which is an agriculturally acceptable carrier or diluent, may be any one or more of a number of carriers that confer a variety of properties, such as increased stability, wettability, dispersability, etc. Suitable carriers may include, but are not limited to, water or other aqueous solutions, slurries, solids (e.g., peat, wheat, bran, vermiculite, pasteurized soil, etc) or dry powders. The composition or formulation may include additional additives including, but not limited to, oils, buffering agents, surfactants, adjuvants, or coating agents. The combination or composition may also comprise, for example, an additional biocontrol agent such as an antifungal agent or pesticide (insecticide, fungicide, nematicide, bacteriocide or herbicide). The combination of the one or more microbial spores of a biological control agent and one or more germinants can be applied as a single dose exposure or in multiple doses or exposures at different times.

The word "comprising" in the claims may be replaced by "consisting essentially of" or with "consisting of," according to standard practice in patent law.

The following example serves to further describe and define the invention, and is not intended to limit the invention in any way.

**EXAMPLE 1:** Studies were conducted to evaluate the effect of glycine betaine or yeast extract in combination with Prestop® (*C. rosea* f. *catenulata* J1446) on strawberry plants

Materials and methods:

(a) Inoculating Strawberry Plants

Young strawberry plants (*Fragaria X ananassa;* "Merced" variety) were allowed to grow at least a week before plants were selected for experiments by healthy appearance and having large leaves facing upwards. Spore counts for *C. rosea f. catenulata* J1446 in the package of Prestop WG used were calculated via haemocytometer to be $1.4 \times 10^{10}$ spores/g and viability of the spores was checked using the MPN (most probably number) method and *C. rosea* f. *catenulata* J1446 was calculated to be $3 \times 10^{9}$CFU/g. Treatments were prepared using 0.025% Prestop® WG in Tween 0.02% with 0.04% Folwin, 0.2% Folwin, 0.06% Glycine Betaine (Intracell®, Lallemand), and 0.6% Glycine Betaine (Intracell®, Lallemand) as well as a 0.025% Prestop WG alone as a control. To spray the strawberry plants, 10ml of each treatment was loaded into a Mastercraft Air Brush Kit with the mini compressor set at approximately 15psi. For each treatment group, 17 plants were sprayed in a circular motion for 10s. On average, 0.5ml of treatment was calculated to be applied per plant. Each coverslip (and the leaf it was attached to) was removed from each plant after spraying, and the slip was placed into a tube containing 1 ml of a 0.02% Tween suspension along with three 3mm glass beads. To ensure homogenization of the mixture, tubes were vortexed for 30s, attached to the shaker (220rpm for 10min), and then vortexed again 10s immediately before loading into a hemocytometer for spore counting. The number of spores obtained from each slip was counted using a hemocytometer to determine deposition rate. Plants were kept in either the greenhouse (Avg. temp 24°C, High 41°C, Low 15°C, Avg. RH 60% ) or in environmental chambers (Avg. temp 28.8°C, High 30.9°C, Low 25.2°C, Avg. RH 75%) for the duration of the experiment being done. Plants for germination studies were kept at these temperatures for 6, 7, 8 or 24h after being sprayed before leaf discs were cut. Plants used for hyphal growth studies were kept at these temperatures for 1, 2, 3 or 6d to allow *C. rosea f. catenulata* J1446 more time to colonize the leaf surface before leaf discs were cut. Plants used for visualising colonization were kept at these temperatures for 3 and 6 days after spraying before leaf discs were cut. Plants were watered every second day with approximately 250ml (1 cup) of water per pot. All plants were removed from greenhouse within 14 days of the start of the experiment; cutting leaf discs in some cases caused irreparable damage to the plant.

(b) Percent germination of *C. rosea f. catenulata* J1446 on strawberry leaf discs

On the same day, after spraying, two 6mm leaf discs were cut using a sterilized staples hole punch from two different leaves per plant from five sprayed strawberry plants per treatment group per time period (6, 7, 8 and 24h) and then dyed with 5ul lactophenol cotton blue. Stained leaf discs were then observed under a compound microscope at 200x magnification. Three viewing areas were chosen at random on each leaf disc and 100 spores were counted: the number that germinated (germ tubes visible at twice the length of the spore) out of that 100 was recorded. Average germination percentages were analyzed per treatment group and per time period.

(c) Hyphal growth of *C. rosea f. catenulata* J1446 from leaf discs onto agar plates

Two 6mm leaf discs were cut using a sterilized staples hole punch from two different leaves per plant from five sprayed plants per treatment per time period (1, 2, 3, and 6 days after spraying) and placed adaxial side downwards onto paraquat-chloramphenicol agar (PCA) medium (0.1mL paraquat, 200mg chloramphenicol, and 12g agar per liter of water). PCA plates containing leaf discs were incubated at room temperature ($\pm$23°C) upside right in partial light and checked daily for growth. After the second day, plates were flipped over to minimize condensation. Growth around the leaf disc was measured with a ruler and recorded as average diameter of growth per day. If the treatments were successful at enhacing fungal growth and colonization on the leaf disc, then larger growth rings of the fungus would be expected to grow off the leaf discs onto the plates as well. Averages in treatments were analyzed.

(d) Statistical analyses

i. Deposition of treatments onto strawberry plants

Deposition data was normal when the distribution was analysed for both greenhouse and environmental chamber studies. Data sets for both growth conditions were analysed using a one-way ANOVA and multiple comparisons of the mean (alpha=0.05) were analysed using a Tukey post hoc test.

ii. Germination on strawberry leaf discs

Data for percent germination assays on strawberry leaves was normal when the distribution was analyzed for both greenhouse and environmental chamber studies. Therefore, data sets for both growth conditions were analysed using a one-way ANOVA and multiple comparisons of the mean (alpha=0.05) were analysed using a Tukey post hoc test.

iii. Hyphal growth on strawberry leaf discs onto agar plates

Data for growth bioassays from 1, 2, 3, and 6 days of greenhouse incubation were all normal when distribution was analysed. Data for growth bioassays from 1, 3, and 6 days of environmental chamber incubation were also all normal when distribution was analysed. Therefore, data sets from all incubation periods and growth conditions were analysed using a full factorial repeated measures mixed model with the following model parameters: time, treatment, and their interaction. Multiple comparisons of the mean (alpha=0.05) were analysed using a Tukey post hoc test.

Results:

Percent germination of *C. rosea f. catenulata* J1446 on leaf discs:

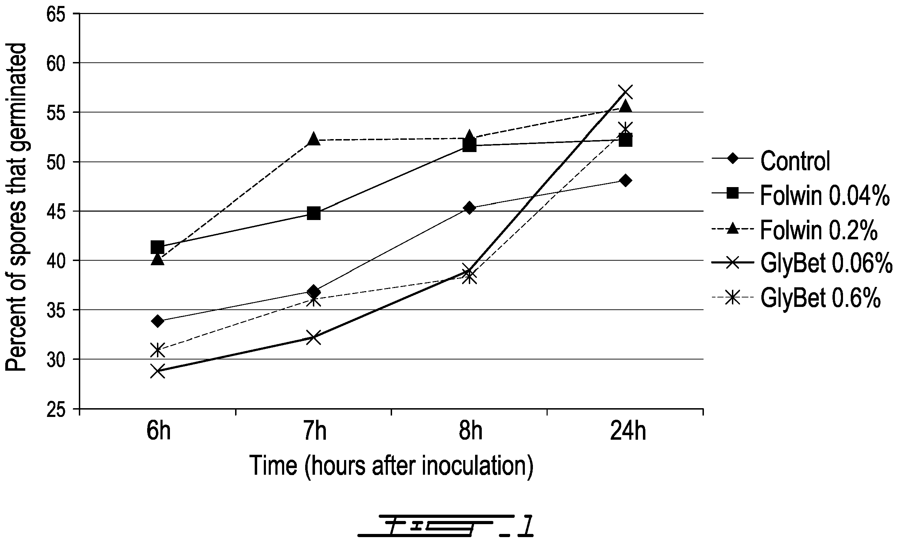

Percent germination over time (Figure 1) was statistically significant F (3,695)= 78.01; p<0.0001 as we observed a general trend that germination increased as time increased. The percentage of spore germination of *C. rosea* J1446 after 24h was increased by the addition of glycine betaine or yeast extract.

i. Greenhouse studies

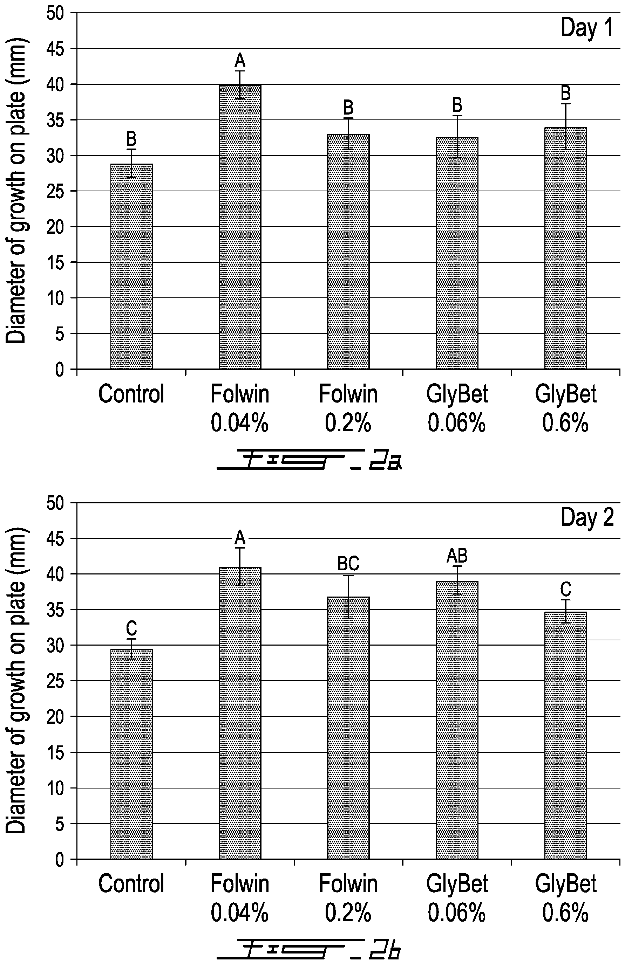

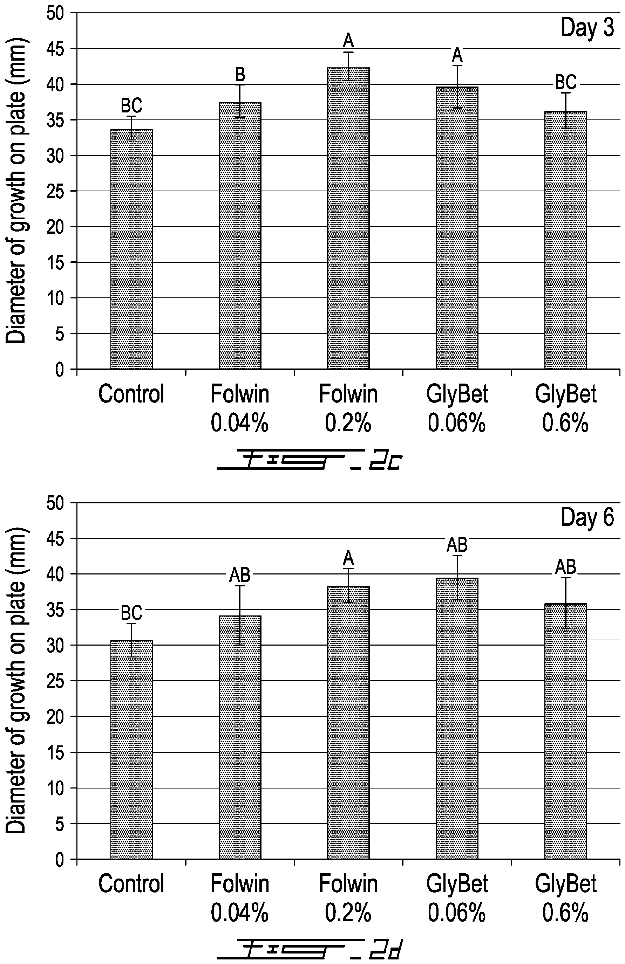

Discs were cut after plants were incubated in the greenhouse for different amounts of time (1 day, 2 day, 3 day, 6 day) and then growth was monitored on the plate for 6 days (Figure 2). The colonization of leaf discs by *C. rosea* J1446 was significantly increased by the addition of glycine betaine or yeast extract.

**EXAMPLE 2:** Greenhouse experiments were performed to demonstrate the efficacy of the combination of *C. rosea* f. *catenulata* J1446 and glycine betaine in controlling *Botrytis cinerea.*

*Botrytis cinerea* was grown on potato dextrose broth for 1 to 2 weeks without shaking. The resulting mycelial and spores were recovered to produce a liquid inoculum.

Tomato plants, variety Admiro (stage: 3-leaf), were sprayed with the *B. cinerea* inoculum (5000 sp/ml) then allowed to dry. Then, the treatments were applied by spraying the inoculated tomato plants.

The following treatments were tested (9 repetitions): (T1) Prestop® (*C. rosea* f. *catenulatum* J1446) 0.003%; (T2) Prestop® (*C. rosea* f. *catenulatum* J1446) 0.003% + glycine betaine (Intracell®, Lallemand) 0.05%; (T3) Prestop® (*C. rosea* f. *catenulatum* J1446) 0.003% + glycine betaine (Intracell®, Lallemand) 0.2%; (T4) glycine betaine (Intracell®, Lallemand) 0.2% and (T5) water.

The plants were placed in greenhouse (Avg. temp 24°C, High 41°C, Low 15°C, Avg. RH 60%) and incubated 5 days. Symptom development was evaluated by measuring the size of the necrotic area (width measurement).

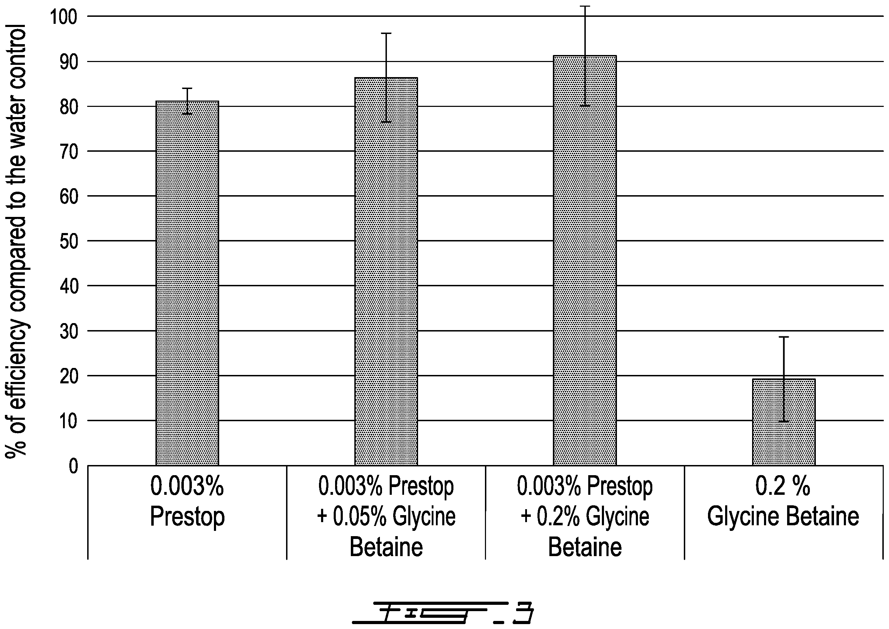

As shown in Figure 3, the efficacy of Prestop® to control *B. cinerea* was increased by the combination with glycine betaine.

Colby's equation was used to determine the effects expected from the components, as described above. The results were measured at 5 days after the application of the components. As shown above, the samples demonstrated synergistic anti-Botrytis effect, with higher measured control than would be predicted by the Colby equation (observed 91 > expected 84.79).

**EXAMPLE 3:** Greenhouse experiments were performed to demonstrate the efficacy of lower dose rates of *C. rosea* f. *catenulata* J1446 in combination with glycine betaine in controlling *Botrytis cinerea.*

The objective of the study was to evaluate the protection efficiency of lower dose rates of C. *rosea* f. *catenulata* J1446 in combination with glycine betaine against *Botrytis cinerea.*

The assay was performed on young tomato plantlet (variety Admiro), susceptible to grey mold. Plants were raised in greenhouse for 3 weeks (until the 2 leaf stage) before being used for the assay.

*Botrytis cinerea* (fungal pathogen causing the tomato grey mold) inoculum was obtained by multiplication on PDA (Potatoes Dextrose Agar) growth medium.

Ounce they had reached the two leaf stage, plants were treated using a glass sprayer (foliar spray). Products (or water for the control) were sprayed until run off.

Tomato grey mold symptom development has been evaluated measuring the size of the necrotic area (width measurement).

The assay was organized in 10 independent repetitions of one plant per modality.

The different modalities were compared to a negative control treated with water.

The following treatments were tested: (T1) water; (T2) Prestop® (*C. rosea* f. *catenulatum* J1446) 0.001%; (T3) Prestop® (*C. rosea* f. *catenulatum* J1446) 0.001% + glycine betaine (Intracell®, Lallemand) 0.08%; (T4) Prestop® (*C. rosea* f. *catenulatum* J1446) 0.001% + glycine betaine (Intracell®, Lallemand) 0.06%; (T5) glycine betaine (Intracell®, Lallemand) 0.08%; and (6) glycine betaine (Intracell®, Lallemand) 0.06%.

The treatments were performed at day-1, the *Botrytis cinerea* inoculation was performed at day 0 and the symptom evaluation was done at day+5. The plants were placed in greenhouse (Avg. temp 24°C, High 41°C, Low 15°C, Avg. RH 60%). Symptom development was evaluated by measuring the size of the necrotic area (width measurement in mm).

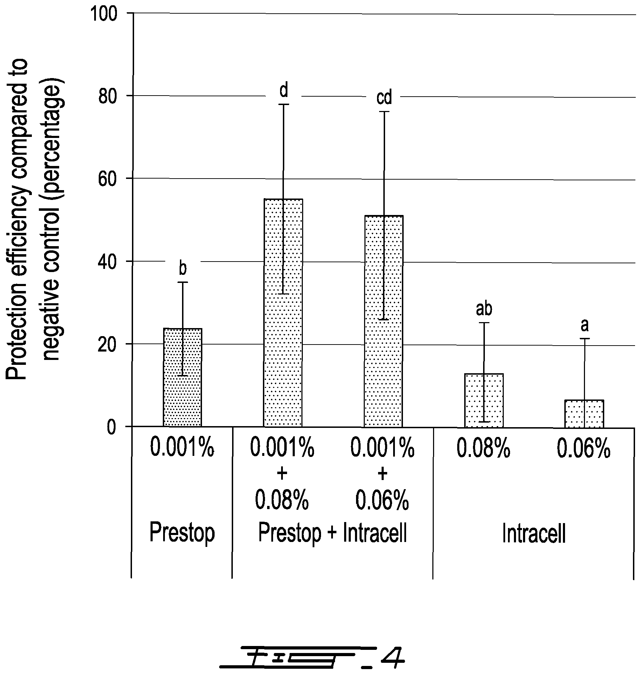

Figure 4 shows the protection efficiency of the different treatments in comparison with the negative control. At the two tested doses, protection efficiency of the combination of Prestop® and glycine betaine was significantly higher than the Prestop® or glycine betaine alone. Also, observed and predicted values as calculated by the Colby's equation: for 0.08% of glycine betaine: observed if 55.2 and expected is 34.2; for 0.06% glycine betaine: observed is 51.4 and expected is 29.06.

**EXAMPLE 4:** A study was conducted to demonstrate the efficiency of the combination of *C. rosea* f. *catenulata* J1446 in combination with glycine betaine in inducing vine resistance to powdery mildew (*Erysiphe necator*).

The trials were carried out on herbaceous vine cuttings with four to five adult leaves grown in greenhouses (Marselan grape variety) at a rate of ten plants per modality. The study consisted of treating the vine cuttings with the different treatments, four days before inoculation and two days after inoculation. The treatments were applied by spraying on both sides of the leaves up to the runoff point.

The inoculation was carried out by spraying a suspension of $10^5$ powdery mildew conidia/mL on the upper surface of the leaves. Treated and inoculated cuttings were placed in greenhouse. The incubation was conducted in conditions: 25°C during the day and 18°C at night with a photoperiod of 18 hours until the end of the experimentation.

The efficacy of the different treatments was evaluated at 18 days post-inoculation by scoring (visual estimation) of the infected area of leaves in "rows" 1, 2 and 3 (first three "adult" leaves from the apex) relative to an untreated control: 0 = no infection; 1 = a few points; 2 = a few small non-contiguous spots; and 3 = large spots, contiguous or not.

The results were analysed using an analysis of variance (alpha=0.05) and multiple comparisons of the mean were analysed using a ISD Fisher test.

The following treatments were tested: (T1) water; (T2) glycine betaine (Intracell®, Lallemand) 0.5 g/L; (T3) Prestop® (*C. rosea* f. *catenulatum* J1446) 0.7 g/L + glycine betaine 0.5 g/L; and (T4) Prestop® (*C. rosea* f. *catenulatum* J1446) 0.7 g/L.

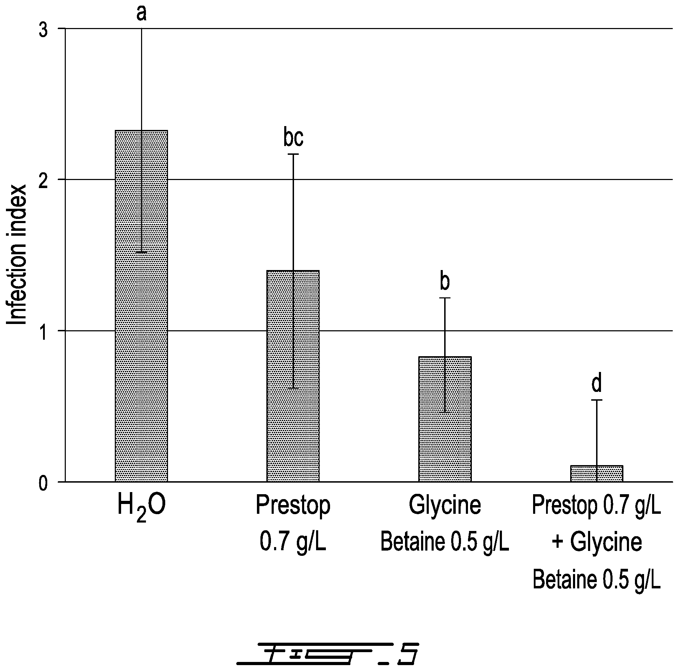

Results are shown in Figure 5. It has been demonstrated that the combination of Prestop® and glycine betaine confered a protective effect on the development of powdery mildew which protective effect is statistically significant compared to the other treatments. It is concluded that glycine betaine increases the effectiveness of Prestop® (*C. rosea* f. *catenulatum* J1446). A partial systemic effect was also observed as the post-treatment formed leaves and the anticipated leaves devolopped after treatments were almost asymptomatic.

**EXAMPLE 5:** A study was conducted to demonstrate the efficiency of the combination of Prestop® (*C. rosea* f. *catenulata* J1446) in combination with glycine betaine to fight against *Rhizoctonia* and *Botrytis* sp. in lettuce crop under greenhouse conditions.

The assay was carried out on lettuce (variety météore). Lettuces were grown under greenhouse conditions naturally contaminated by *Rhizoctonia* and *Botrytis* sp. with four repetitions for each treatments. Each plots of land (40 lettuces per plot) included four rows having a length of 5 m and a width of 1.32 m.

The following treatments were tested: (T1) water; (T2) Prestop® (*C. rosea* f. *catenulatum* J1446) 0.025%; and (T3) Prestop® (*C. rosea* f. *catenulatum* J1446) 0.025% + glycine betaine (Intracell®) 0.6%. The first application was done by soaking the lettuce in the solutions during 20 secondes. The three subsequent applications of the treatments on the lettuce was carried out by spraying at a rate of 500 L/ha on the leaves in three subsequent applications.

Evolution of disease frequency was evaluated three time during crop development (transplanting +10; + 20 ; +30 days) and at harvest. Scoring was performed by presence/absence of the disease on 40 plants from the four rows. Disease intensity and severity were assessed at the harvest on 20 plants from the four rows following the given scale: Grade 1: healthy lettuce; Grade 2: low attack, colar and basal leaves infested; Grade 3: strong attack, numerous infested leaves; and Grade 4: very strong attack, unmarketable lettuces. Marketable lettuces are those found with a score of 1 and 2.

The results (average comparison on disease frequency and yield) were analysed using an analysis of variance (alpha=0.05). A Khi$^2$ test was performed on *Botrytis sp* and *Rhizoctonia* intensity and severity at harvest.

Phytotoxicity scorings were performed three and seven days after each application. No phytotoxity symptoms nor effects on non-targeted organisms were found in this trial.

In accordance with the protocol, frequency scoring on 40 lettuces per plot started 10 days after planting, and 20 days, but no one symptom was observed. *Botrytis sp.* attacks appeared at the third notation (planting + 27 days). Two scoring were done after.

Results have indicated that *Rhizoctonia* and *Botrytis* attack was strong in the trial with around 100% of infested lettuces in the untreated control (grade 2-4). The control presents significantly less healthy lettuce and more lettuce unmarketable grade 4 (results of Khi$^2$ is below).

As indicated in Table 1, the treatments with Prestop in combination with glycine betaine significantly augment the number of healthy lettuce.

Khi$^2$ tests performed on intensity scoring collar rot at harvest can be understood according to these codes:

*(+) : observed headcount higher than theorical headcount*

*(-) : observed headcount lower than theorical headcount*

*NS: non-significant Khi$^2$ at 0.100 threshold*

*\* : significant Khi$^2$ test at 0.100 threshold*

*\*\*: significant Khi$^2$ test at 0.05 threshold*

*\*\*\*: significant Khi$^2$ test at 0.010 threshold*

Table 1: Khi$^2$ test on "collar rot" intensity at harvest.

| Treatments | Grade 1 |
| --- | --- |
| T1 - Control | 1% (-) ** |
| T2 - Prestop | 12% (+) * |
| T3 - Prestop® + glycine betaine | 20% (+) *** |

**EXAMPLE 6:** A study was conducted to evaluate the efficiency of the combination of Prestop® (*C. rosea* f. *catenulata* J1446) in combination with glycine betaine to reduce the inoculum of apple scab (*Venturia inaequali*s) in an apple orchard.

The trial was carried out on potted trees of the Gala variety. Six trees per treatment were reserved for this test.

The following treatments were tested: (T1) water; (T2) Prestop® (*C. rosea* f. *catenulatum* J1446) 250g/ha + Silwet L-77 0.25 ml/l; (T3) Prestop® (*C. rosea* f. *catenulatum* J1446) 250g/ha + glycine betaine (Intracell®, Lallemand) 300g/ha; and (T4) glycine betaine (Intracell®, Lallemand) 300g/ha. Two application strategies were tested: (a) one application four days before pathogen inoculation; and (b) a first application four days before pathogen inoculation and a second application after pathogen inoculation when a cumulative of 300°C/hour was reached after the inoculation.

A solution of conidia of *V. inaequalis* was prepared from 2018 scabbed leaves stored in the freezer. The trees were kept under fog for at least one hour before contamination and then at least 12 hours afterwards. The duration was adapted according to ambient temperature and humidity. The spray volume was defined after a blank test to cover sufficient vegetation without reaching the runoff point (between 30 and 50 mL/tree). The treatments were applied using a hand-held sprayer and carried out four days before inoculation with the pathogen (strategies (a) and (b)) and within 300°C/H after inoculation for strategy (2) only.

The frequency and intensity of foliar symptoms of scab were observed. Observation was carried out four to five days after the start of the first spots, using a 0 to 4 rating scale. Trees were scored individually and were made on all the leaves of each tree.

The results are shown in Table 2 and the treatment « Prestop® + glycine betaine » (one application before inoculation or one application before and one at 300°H after) decreased the average number of scabbed leaves by 8 to 9% compared to the control treated with water. In this experiment, Silwet is included as an adjuvant.

Table 2: Frequency of occurrence of foliar symptoms of scab.

| Number of applications | Frequency of foliar symptoms of scab | |
|---|---|---|
| One application four days before inoculaton with the pathogen | Water | 63.0% |
| | Prestop® (*C. rosea* f. *catenulatum* J1446) 250g/ha + Silwet L-77 0.25 ml/l | 70.5% |
| | Prestop® (*C. rosea* f. *catenulatum* J1446) 250g/ha + glycine betaine 300g/ha | 53.8% |
| | Glycine betaine 300g/ha | 59.6% |
| One application four days before inoculaton with the pathogen + a second application after pathogen inoculation when a cumulative of 300°C/hour was reached after the inoculation | Water | 56.1% |
| | Prestop® (*C. rosea* f. *catenulatum* J1446) 250g/ha + Silwet L-77 0.25 ml/l | 56.6% |
| | Prestop® (*C. rosea* f. *catenulatum* J1446) 250g/ha + glycine betaine 300g/ha | 47.9% |
| | Glycine betaine 300g/ha | 58.5% |

**EXAMPLE 7:** A study was conducted to evaluate the effect of glycine betaine, yeast extract or a combination thereof on the enhancement of the conidial germination rate of *Beauveria bassiana.*

A strain of *B. bassiana* (Granada, Lallemand) was used in the study.

Conidia of *B. bassiana* were diluted in sterile distilled water containing Tween 80 (0.05%). The concentration of the treatments applied was $1 \times 10^6$ CFU/ml.

Glycine betaine (Intracell®, Lallemand; 0.2% in 100L/ha of spray mix) (T2), yeast extract (FNI, Lallemand; 0.2% in 100L/ha of spray mix) (T3) and a combination of glycine betaine (Intracell®, Lallemand; 0.2% in 100L/ha of spray mix) and yeast extract (FNI, Lallemand; 0.2% in 100L/ha of spray mix) (T4) were tested to stimulate the conidia germination of *B. beauveria.*

*B. bassiana* conidia were paired with the three above-menetioned treatments at a ratio of 1:1. Suspension of only *B. bassiana* conidia in sterile distilled water plated on water agar was used as a negative control (T1). Six repetitions were made by treatment.

One hundred μL of suspension per combination (six replicates) was placed on a petri dishes containing water agar (15 g/L). The plates were incubated at 25°C in the dark. Evaluation of germination rates and the germ-tube elongation was carried out under light microscope (at 40x magnification) after four, eight, 12 and 16 hours of incubation.

The data were submitted to normality and homogeneity tests (Shapiro-Wilk and Bartlett test). Once this meet the principles, it was subjected to ANOVA statistical analysis of variance and the means compared by the Tukey test ($p < 0.05$). The R Studio version 1.2.1335 statistical software was used.

As shown in Table 3, the addition of glycine betaine, yeast extract or a combination thereof increased significantly the germination rate of *B. bassiana* conidia.

Table 3: Number of germinated *B. bassiana* conidia in suspensions containing mixtures of conidia with the tested substances that had been incubated together for 16 hours at 25°C.

| n. | Treatments | Average of germinated conidia (%) per hour | | | | | | | |
|---|---|---|---|---|---|---|---|---|---|
| | | 4h | | 8h | | 12h | | 16h | |
| T1 | *B. bassiana:* - water-agar (negative control) | 0,00 | NS | 5,67 | B* | 31,00 | B | 56,50 | C |
| T2 | *B. bassiana* + glycine betaine | 0,00 | | 3,83 | B | 33,00 | B | 71,17 | B |
| T3 | *B. bassiana* + yeast extract | 0,00 | | 6,00 | B | 40,83 | B | 74,67 | AB |
| T4 | *B. bassiana* + glycine betaine + yeast extract | 0,00 | | 9,00 | B | 41,50 | B | 70,50 | B |
| NS: Non-significant * Means followed by the same letter do not significantly differ from each other according to Tukey's test (P>0.05). | | | | | | | | | |

A bioassay was carried out to evaluate the efficacy of the combination of B. bassiana with glycine betaine, yeast extract or the combination of glycine betaine with yeast extract in controlling whiteflies (*Bemisia tabaci* (Gennadius) (Hemiptera: Aleyrodidae).

The treatments tested were the following ones: (T1) Tween 80 0.05% (negative control); (T2) *B. bassiana* (Granada, Lallemand) (positive control); (T3) *B. bassiana* + glycine betaine 0.2% (Intracell®, Lallemand); (T4) *B. bassiana* + yeast extract 0.2% (FNI, Lallemand); and (T5) B. *bassiana* in combination with glycine betaine 0.2% (Intracell®, Lallemand) and yeast extract 0.2% (FNI, Lallemand). Seven repetitions were made by treatment.

Conidia of *B. bassiana* were diluted in sterile distilled water containing Tween 80 (0.05%). The concentration of the treatments applied was $2 \times 10^7$ CFU/ml. *B. bassiana* conidia were paired with the above-menetioned treatments at a ratio of 1:1.

Bean plants (two leaves-stage) were infested with adults whiteflies. After oviposition on the plants for a period of 24 hours, adults were removed and the plants were transferred to a separate room for the development of the nymphs until the second instar. Then, the abaxial surface of bean leaves were sprayed with the different treatments with the aid of an airbrush. The plants were kept in a greenhouse (temperature ranging from 14 °C to 30 °C) and the mortality was evaluated.

The data were submitted to normality and homogeneity tests (Shapiro-Wilk and Bartlett test), an analysis of deviance was performed and the means compared by the Tukey test (p <0.05). The R Studio version 1.2.1335 statistical software was used.

As shown in Table 4, the results indicate that there is a superior entomopathogenic activity when *B. bassiana* is combined with glycine betaine, yeast extract or a combination of glycine betaine with yeast extract compared to the controls.

Table 4: Average of nymph mortality (in %) 10 days after application of the treatments

| n. | Treatments | Average of nymph mortality (%) 10 days after application |
|---|---|---|
| T1 | Tween 80 0.05% (negative control) | 2,52c |
| T2 | *B.* bassiana (Granada, Lallemand) (positive control) | 3,53c |
| T3 | *B. bassiana* + glycine betaine | 9,33b |
| T4 | *B. bassiana* + yeast extract | 16,42a |
| T5 | *B. bassiana* + glycine betaine + yeast extract | 11,26b |
| * Means followed by the same letter do not significantly differ from each other according to Tukey's test (P>0.05). | | |

**EXAMPLE 8:** Study was conducted to evaluate the effect of glycine betaine, yeast extract or a combination thereof on the enhancement of the conidial germination rate of *Cordyceps javanica.*

Conidia of *C. javanica* were diluted in sterile distilled water containing Tween 80 (0.05%). The concentration of the treatments applied was $1 \times 10^6$ CFU/ml.

Glycine betaine (Intracell®, Lallemand; 0.2% in 100L/ha of spray mix) (T2), yeast extract (FNI, Lallemand; 0.2% in 100L/ha of spray mix) (T3) and a combination of glycine betaine (Intracell®, Lallemand; 0.2% in 100L/ha of spray mix) and yeast extract (FNI, Lallemand; 0.2% in 100L/ha of spray mix) (T4) were tested to stimulate the conidia germination of *C. javanica.*

*C. javanica* conidia were paired with the three above-menetioned treatments at a ratio of 1:1. Suspension of only *C. javanica* conidia in sterile distilled water plated on water agar was used as a negative control (T1).

One hundred µL of suspension per combination (six replicates) was placed on a petri dishes containing water agar (15 g/L). The plates were incubated at 25°C in the dark. Evaluation of germination rates and the germ-tube elongation was carried out under light microscope (at 40x magnification) after four, eight and 12 hours of incubation.

The data were submitted to normality and homogeneity tests (Shapiro-Wilk and Bartlett test). Once this meet the principles, it was subjected to ANOVA statistical analysis of variance and the means compared by the Tukey test (p <0.05). The R Studio version 1.2.1335 statistical software was used.

As shown in Table 5, the addition of glycine betaine, yeast extract or a combination thereof increased the germination rate of C. *javanica* conidia. Results indicated that the conidial germination was stimulated more strongly by yeast extract and the combination of glycine betaine and yeast extract.

Table 5: Number of germinated C. *javanica* conidia in suspensions containing mixtures of conidia with the tested substances that had been incubated together for 12 hours at 25°C.

| n. | Treatments | Average of germinated conidia (%) per hour | | | | | |
|----|-----------|---------|---------|---------|---------|---------|---------|
| | | 4h | | 8h | | 12h | |
| T1 | C. *javanica* (Negative control) | 0,00 | ns* | 22,5 | C | 85,67 | C |
| T2 | C. *javanica* + glycine betaine | 0,00 | | 53 | B | 88,5 | BC |
| T3 | C. *javanica* + yeast extract | 0,00 | | 82,5 | A | 93,17 | AB |
| T4 | C. *javanica* + glycine betaine + yeast extract | 0,00 | | 84,5 | A | 93,5 | AB |
| NS: Non-significant * Means followed by the same letter do not significantly differ from each other according to Tukey's test (P>0.05). | | | | | | | |

A bioassay was carried out to evaluate the efficacy of the combination of *C. javanica* with yeast extract or the combination of glycine betaine with yeast extract in controlling whiteflies (*Bemisia tabaci* (Gennadius) (Hemiptera: Aleyrodidae).

The treatments tested were the following ones: (T1) Tween 80 0.05% (negative control); (T2) *C. javanica* (positive control); (T3) *C. javanica* + yeast extract 0.2% (FNI, Lallemand); and (T4) *C. javanica* + glycine betaine 0.2% (Intracell ®, Lallemand) + yeast extract 0.2% (FNI, Lallemand). Seven repetitions were made by treatment.

Conidia of *C. javanica* were diluted in sterile distilled water containing Tween 80 (0.05%). The concentration of the treatments applied was $2\times10^7$ CFU/ml. *C. javanica* conidia were paired with the above-menetioned treatments at a ratio of 1:1.

Bean plants (two leaves-stage) were infested with adults whiteflies. After oviposition on the plants for a period of 24 hours, the plants were transferred to a separate room for the development of the nymphs until the second instar. Then, the abaxial surface of bean leaves were sprayed with the different treatments with the aid of an airbrush. The plants were kept in a greenhouse (temperature ranging from 14 °C to 30 °C) and the mortality was evaluated.

The data were submitted to normality and homogeneity tests (Shapiro-Wilk and Bartlett test), an analysis of deviance and the means compared by the Tukey test (p <0.05). The R Studio version 1.2.1335 statistical software was used.

As shown in Table 6, the results indicate that there is a superior entomopathogenic activity when *C. javanica* is combined with yeast extract or yeast extract in combination with glycine betaine compared to the controls.

Table 6: Average of nymph mortality (in %) 7 days after application of the treatments

| n. | Treatments | Average of nymph mortality (%) 7 days after application |
|----|-----------|---------|
| T1 | Tween 80 0.05% (negative control) | 1,68d |
| T2 | C. *javanica* (positive control) | 10,05c |
| T3 | C. *javanica* + yeast extract | 37,18a |
| T4 | C. *javanica* + glycine betaine + yeast extract | 17,28b |
| * Means followed by the same letter do not significantly differ from each other according to Tukey's test (P>0.05). | | |

**EXAMPLE 9:** A study was conducted to evaluate the effect of yeast extract on the enhancement of the conidial germination rate of *Trichoderma asperellum* (Quality®, Lallemand).

A laboratory trial was carried out. The following treatments were evaluated (including three repetitions): (T1) *T. asperellum* (Quality, Lalemand) alone 1 g/kg of seeds; and (T2) *T. asperellum* 1 g/kg of seeds + yeast extract (FNI, Lallemand) 1 g/kg of seeds which corresponds to a concentration of 0.001 %.

Soybean seeds were weighted and 500 g of seeds was used by treatment. The products were diluted in distilled water and the seeds were inoculated by spraying. After the treatments, the seeds were stored in a fresh and ventilated environment.

After the seed incoluation, the germination percentage of viable conidia was evaluated. Two samples of 100 g (16.67 g on average) inoculated seeds were weighted and distribute in two Erlenmeyers with sterile dilution solution (0.9% NaCl - 0.1% Tween), forming the dilution 0. The vials were agitated for 20-30 minutes at 240 rpm. Dilutions were done in series, the solutions were plates on PDA and the petri dishes incubated at 25° C for 7 days.

For the evaluaton of the viability of conidia (in %), the seeds were washed with n isotonic solution and the resulting solution was homogenized in a vortex for 10-20 seconds. The suspension was diluted as required and plated on Petri dish containing 1/5 acidified BDA medium. This step was repeated five times for each time point: 0, 3h, 6h, 12h, 16h, 20h hours after incubation. The plates were incubated at 25°C.

The evaluation of the viability was done using an optical microscope. Spores considered viable are those that have a germ tube equal to or larger than spore; active but not germinated spores are those that swell but do not form a germ tube; and nonviable spores are those that do not swell, do not stain with the dye solution or have a very poor color compared to the swollen ones.

The spores that had germinated were calculated using the following formula:

$$\text{Viability (\%)} = \text{viable conidia average} / (\text{inactive conidia average} + \text{viable conidia average}) \times 100$$

The generated data were submitted to normality and homogeneity tests (Shapiro-Wilk and Bartlett test). Once these principles were met, they were submitted to statistical analysis of ANOVA variance and Tukey's test ($P \leq 0.05$). For data that did not meet the principles, they were submitted to to an analysis of deviance test and the means compared by the Tukey test ($P \leq 0.05$). The R Studio version 1.2.1335 statistical software was used.

As shown in Table 7, the percentage of conidia germination of *T. asperellum* was significantly increased by the addition of yeast extract.

Table 7: Percent of germinated *T. asperellum* conidia in suspensions containing mixtures of conidia with the tested substances that had been incubated together for 20 hours at 25°C.

| Treatments | 3 hours | 6 hours | 12 hours | 16 hours | 20 hours |
|---|---|---|---|---|---|
| *T. asperellum* (Quality®, Lalemand) | 0 | 0 | 1.83% b | 47.5% b | 49.5% b |
| *T. asperellum* (Quality®, Lalemand) + yeast extract | 0 | 0 | 24.83% a | 54.5% a | 56.5% a |
| Means followed by the same letter do not differ statistically from each other by the Tukey test at 5% significance. | | | | | |

A greenhouse trial was conducted to evaluate whether the presence yeast extract would also increased the biostimulation effect of *T. asperellum.*

Soybean seeds were treated as mentioned above. The sowing was performed on the same day of seed treatment, allowing to approximate the reality of the field and offer favorable conditions for the survival of microorganisms. Each experimental unit consisted of two four L pot containing sand. A soybean seed with a depth of two cm (recommended for cultivation) was sown in each pot.

The percentage of number of emerged seedlings was carried out daily up to ten days of evaluation and the germination speed index was calculated according to Maguire (1962).

The experiment was conducted until the plants reached the vegetative cycle V2 (25 days). At the end of this period the plants were collected and washed in running water to minimize loss of thin roots. The root volume, aerial part length, fresh aerial part and root mass and dry aerial pat and root mass was done according to methods known in the art.

An ANOVA was conducted followed by a Tukey test for Aerial Part Length, Fresh aerial part mass, fresh root mass and dry aerial part mass. Analyses of Deviance (Gamma distribution) followed Tukey test for Emergence Speed Index, Root Volume (ml) and Dry root mass (cm) were also performed. The Software R Studio version 1.2.1335 was used for all statistical analysis.

The results demonstrated that the seeds coated with *T. asperellum* and yeast extract provided the highest dry root mass compared to soybean seeds treated only with *T. asperellum* (Table 8). This demonstrated that the presence of yeast extract increases the biostimulaton effet of *T. asperellum.*

Table 8: Biostimulation effect of *T. asperellum* on soybeans

| Treatments | Dry root mass (g) |
|---|---|
| Water | 0.16 c |
| *T. asperellum* (Quality, Lalemand) | 0.22 a |
| *T. asperellum* (Quality, Lalemand) + yeast extract | 0.35 b |
| Means with the same letters don't differ by Tukey's test (P ≤ 0.05) | |

**Claims**

1. A method for enhancing the germination rate of a fungal spore comprising contacting to a host: (a) one or more fungal spores of a biological agent or biological control agent, wherein the one or more fungal spores belong to the genus *Chlonostachys, Beauveria, Cordyceps, Serendipita,* or *Trichoderma,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof.

2. The method of claim 1, wherein:

   (i) upon contact of the one or more fungal spores and the one or more germinants to the host, the one or more fungal spores of the biological agent or biological control agent exhibit an increased spore germination compared to contacting one or more fungal spores to the host without the one or more germinants; and/or
   (ii) the host is soil, a pest, a plant or a plant part, optionally wherein: the plant part comprises or consists of a seed; and/or the contacting comprises foliarly applying to the plant or plant part the one or more fungal spores of a biological control agent and the one or more germinants.

3. A method for: controlling a plant pathogen or a pest or protecting a plant from a plant pathogen or a pest wherein the plant pathogen is a fungus or the pest is an insect pest, said method comprising contacting soil, a pest, a plant or a plant part with (a) one or more fungal spores of a biological agent or biological control agent, wherein the one or more fungal spores belong to the genus *Chlonostachys, Beauveria,* or *Cordyceps,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof; or improving growth, development and/or productivity of a plant, said method comprising contacting soil, a pest, a plant or a plant part with (a) one or more fungal spores of a biological agent or biological control agent, wherein the one or more fungal spores belong to the genus *Serendipita,* or *Trichoderma,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof.

4. A method for enhancing the efficacy of a biological agent or biological control agent, said method comprising contacting soil, a pest, a plant or a plant part with (a) one or more fungal spores of a biological agent or biological control agent, wherein the one or more fungal spores belong to the genus *Chlonostachys, Beauveria, Cordyceps, Serendipita, or Trichoderma,* and combinations thereof, and (b) one or more germinants, wherein said one or more germinants comprises glycine betaine, a yeast extract, inactive yeast, yeast cell walls, a yeast cell wall fraction, a yeast cell wall product, or a combination thereof.

5. The method of claim 3 or 4, wherein upon contact of the one or more fungal spores and the one or more germinants to soil, the pest, the plant or the plant part, the one or more fungal spores of the biological control agent exhibits an improved efficacy in inhibiting plant pathogens or exhibits an increased pest control compared to contacting one or more fungal spores to the host without the one or more germinants or the one or more fungal spores of the biological agent exhibits improved efficacy in improving plant growth, development and/or productivity, optionally wherein:

   (i) the improving the growth, development and/or productivity of a plant comprises improving at least one of the following: the degree of mycorrhization, the rooting of the plant, the growth of the plant, the height of the plant, the flowering of the plant, the fresh biomass of the plant, the dry biomass of the plant, the yield of the plant, the nutrition of the plant, the resistance of the plant to abiotic stresses, and combinations thereof; and/or

(ii) the plant part comprises or consists of a seed.

6. The method of any one of claims 3-5, wherein the contacting comprises foliarly applying to the plant or plant part the one or more fungal spores of a biological control agent and the one or more germinants.

7. A method for manufacturing a composition which comprises mixing (a) one or more fungal spores of a biological agent or biological control agent, wherein the one or more fungal spores belong to the genus *Chlonostachys, Beauveria, Cordyceps, Serendipita,* or *Trichoderma,* and combinations thereof and (b) one or more germinants to obtain a composition comprising (a) the one or more fungal spores of a biological agent or biological control agent and (b) the one or more germinants, wherein said one or more germinants comprises glycine betaine, a yeast extract, inactive yeast, yeast cell walls, a yeast cell wall fraction, a yeast cell wall product, or a combination thereof, optionally wherein:

   (i) the method further comprises mixing the (a) one or more fungal spores of a biological agent or biological control agent and (b) one or more germinants with (c) a carrier to obtain a composition comprising (a) the one or more fungal spores of a biological agent or biological control agent, (b) the one or more germinants and (c) the carrier; and/or
   (ii) said composition is for controlling a plant pathogen or a pest or improving growth, development and/or productivity of a plant.

8. A composition for controlling a plant pathogen or a pest or improving growth, development and/or productivity of a plant, wherein the composition comprises (a) one or more fungal spores of a biological agent or biological control agent, wherein the one or more fungal spores belong to the genus *Chlonostachys, Beauveria, Cordyceps, Serendipita,* or *Trichoderma,* and combinations thereof; and (b) one or more germinants, wherein said one or more germinants comprises glycine betaine, a yeast extract, inactive yeast, yeast cell walls, a yeast cell wall fraction, a yeast cell wall product, or a combination thereof; optionally further comprising (c) a carrier.

9. Use of an effective amount of (a) one or more fungal spores of a biological agent or a biological control agent, wherein the one or more fungal spores belong to the genus *Chlonostachys, Beauveria, Cordyceps, Serendipita,* or *Trichoderma,* and combinations thereof, and (b) one or more germinants for enhancing the germination rate of the one or more fungal spores of a biological agent or a biological control agent, wherein said one or more germinants comprises glycine betaine, a yeast extract, inactive yeast, yeast cell walls, a yeast cell wall fraction, a yeast cell wall product, or a combination thereof, optionally wherein the use:

   (i) enhances the germination rate of the one or more fungal spores of a biological agent or biological control agent thereby controlling a plant pathogen or pest or improving growth, and development and/or productivity of a plant;
   (ii) enhances the germination rate and antimicrobial activity or pesticidal activity of the one or fungal spores of the biological control agent compared to the germination rate and antimicrobial activity or pesticidal activity of the one or more fungal spores of a biological control agent when used without the one or more germinants; and/or
   (iii) enhances the germination rate and the efficacy in improving the plant growth, development and/or productivity of the one or more fungal spores of the biological agent compared to the germination rate and the efficacy in improving plant growth, development and or productivity of the one or more fungal spores of the biological control agent when used without the one or more germinants.

10. The method of any one of claims 1-7, the composition of claim 8, or the use of claim 9, wherein the one or more germinants comprises:

    (i) glycine betaine;
    (ii) a yeast extract, inactive yeast, yeast cell walls, a yeast cell wall fraction, a yeast cell wall product, or a combination thereof, preferably wherein the one or more germinants comprises a yeast extract; or
    (iii) a combination of glycine betaine and a yeast extract, inactive yeast, yeast cell walls, a yeast cell wall fraction, a yeast cell wall product, or a combination thereof, preferably wherein the one or more germinants comprises a combination of glycine betaine and a yeast extract.

11. The method of any one of claims 1-7 and 10, the composition of claim 8 and 10, or the use of claim 9 and 10, wherein the one or more fungal spores belong to the species *Chlonostachys rosea* var. *catenulatum, Beauveria bassiana, Cordyceps javanica, Trichoderma asperellum,* or combinations thereof, , optionally wherein the one or more fungal spores are:

> (i) one or more entomopathogenic fungal spores, optionally wherein the one or more entomopathogenic fungal spores are one or more entomopathogenic fungal spores of *Beauveria bassiana, Cordyceps javanica,* or combinations thereof; and/or
> (ii) one or more conidia or chlamydospores; or
> (iii)one or more fungal spores of *Chlonostachys rosea* var. *catenulatum,* optionally wherein the *Chlonostachys rosea* var. *catenulatum* is *C. rosea f. catenulata,* optionally wherein the *C. rosea f. catenulata* is strain J1446.

**12.** The method of any one of claims 1-7, 10 and 11, the composition of any one of claims 8, 10 and 11, or the use of any one of claims 9-11, wherein:

> (i) the one or more fungal spores of a biological control agent are one or more spores of *C. rosea f. catenulata* and the one or more germinants comprises glycine betaine, optionally wherein the *C. rosea f. catenulata* is strain J1446;
> (ii) the one or more fungal spores of a biological control agent are one or more spores of *C. rosea f. catenulata* and the one or more germinants comprises a yeast extract or inactive yeast, yeast cell walls, a yeast cell wall fraction, a yeast cell wall product, or a combination thereof, preferably wherein the one or more germinants comprises a yeast extract, and optionally wherein the *C. rosea f. catenulata* is strain J 1446;
> (iii) the one or more fungal spores of a biological control agent are one or more spores of *C. rosea f. catenulata* and the one or more germinants comprises a combination of glycine betaine and a yeast extract or inactive yeast, yeast cell walls, a yeast cell wall fraction, a yeast cell wall product, or a combination thereof, preferably wherein the one or more germinants comprises a combination of glycine betaine and a yeast extract, and optionally wherein the *C. rosea f. catenulata* is strain J1446;
> (iv) the one or more fungal spores of a biological control agent are one or more spores of *Beauveria bassiana* and the one or more germinants comprises glycine betaine;
> (v) the one or more fungal spores of a biological control agent are one or more spores of *Beauveria bassiana* and the one or more germinants comprises a yeast extract or inactive yeast, yeast cell walls, a yeast cell wall fraction, a yeast cell wall product, or a combination thereof, preferably wherein the one or more germinants comprises a yeast extract;
> (vi) the one or more fungal spores of a biological control agent are one or more spores of *Beauveria bassiana* and the one or more germinants comprises a combination of glycine betaine and a yeast extract or inactive yeast, yeast cell walls, a yeast cell wall fraction, a yeast cell wall product, or a combination thereof, preferably wherein the one or more germinants comprises a combination of glycine betaine and a yeast extract;
> (vii) the one or more fungal spores of a biological control agent are one or more spores of *Cordyceps javanica* and the one or more germinants comprises glycine betaine;
> (viii) the one or more fungal spores of a biological control agent are one or more spores of *Cordyceps javanica* and the one or more germinants comprises a yeast extract or inactive yeast, yeast cell walls, a yeast cell wall fraction, a yeast cell wall product, or a combination thereof, preferably wherein the one or more germinants comprises a yeast extract;
> (ix) the one or more fungal spores of a biological control agent are one or more spores of *Cordyceps javanica* and the one or more germinants comprises a combination of glycine betaine and a yeast extract or inactive yeast, yeast cell walls, a yeast cell wall fraction, a yeast cell wall product, or a combination thereof, preferably wherein the one or more germinants comprises a combination of glycine betaine and a yeast extract;
> (x) the one or more fungal spores of a biological agent are one or more spores of *Trichoderma asperellum* and the one or more germinants comprises glycine betaine;
> (xi) the one or more fungal spores of a biological agent are one or more spores of *Trichoderma asperellum* and the one or more germinants comprises a yeast extract or inactive yeast, yeast cell walls, a yeast cell wall fraction, a yeast cell wall product, or a combination thereof, preferably wherein the one or more germinants comprises a yeast extract; or
> (xii) the one or more fungal spores of a biological agent are one or more spores of *Trichoderma asperellum* and the one or more germinants comprises a combination of glycine betaine and a yeast extract or inactive yeast, yeast cell walls, a yeast cell wall fraction, a yeast cell wall product, or a combination thereofderivative, preferably wherein the one or more germinants comprises a combination of glycine betaine and a yeast extract.

**13.** The method of any one of claims 1-7 and 10-12, the composition of any one of claims 8 and 10-12, or the use of any one of claims 9-12, wherein:

A) the fungus belongs to the genus *Botrytis, Erysiphe, Rhizoctonia, Venturia, Didymella, Fusarium, Pseudoidium, Podosphaera* and combinations thereof, optionally wherein:

(i) the fungus belongs to the genus *Botrytis,* preferably wherein the fungus is *Botrytis cinerea;*
(ii) the fungus belongs to the genus *Erysiphe,* preferably wherein the fungus is *Erysiphe necator;*
(iii) the fungus belongs to the genus *Rhizoctonia,* preferably wherein the fungus is *Rhizoctonia solani, Rhizoctonia bataticola; Rhizoctonia fragariae; Rhizoctonia leguminicola* or *Rhizoctonia oryzae,* preferably wherein the fungus is *Rhizoctonia solani;*
(iv) the fungus belongs to the genus *Venturia,* preferably wherein the fungus is *Venturia inaequalis;*
(v) the fungus belongs to the genus *Pseudoidium,* preferably wherein the fungus is *Pseudoidium neolycopersici;* or
(vi) the fungus belongs to the genus *Podosphaera,* preferably wherein the fungus is *Podosphaera xanthii;* or

B) the insect pest belongs to the species *Diuraphis noxia, Bemisia argentifolii, Bemisia tabaci, Trialeurodes vaporariorum, Aleyrodes lonicerae, Diaphorina citri, Euphyllura olivine, Aphis gossypii, Myzus persicae, Macrosiphum euphorbiae, Aulacorthum solani, Heliothrips haemorrhoidalis, Frankliniella occidentalis, Frankliniella schulzei, Thrips tabaci, Scirtothrips dorsalis, Hercinothrips femoralis, Dalbulus maidis, Phenacoccus solenopsis, Pseudococcus longispinus, Paracoccus marginatus, Mahanarva fimbriolata, Deois flavopicta, Zulia entreriana, Notozulia entreriana, Hypothenemus hampei, Hedypathes betulinus, Cosmopolites sordidus, Gonipterus scutellatus, Agriotes spp., Plutella xyllostella, Helicoverpa armigera, Otiorhyncus sultacus, Fungus gnats, Exomala orientalis, Sciaridae, Otiorhynchus sulcatus, Strophosoma melanogrammum, S. capitatum, Phyllopertha horticola, Amphimallon solstitialis, Daktulosphaira vitifoliae, Diabrotica virgifera Spodoptera* spp, *Oligonychus ilicis, Planococcus citri, Anthonomus grandis, Brevicoryne brassicae* or *Sphenophorus levis;*
optionally wherein the insect pest belongs to the species *Bemisia tabaci, Bemisia argentifolii, Trialeurodes vaporariorum, Hypothenemus hampei, Cosmopolites sordidus, Sphenophorus levis, Anthonomus grandis, Diaphorina citri, Helicoverpa armigera, Frankliniella occidentalis, Frankliniella schulzei, Thrips tabaci, Aphis gossypii, Myzus persicae, Oligonychus ilicis, Planococcus citri, Mahanarva fimbriolata, Agriotes spp, Diabrotica spp or Dalbulus maidis,* preferably wherein the insect pest is *Bemisia tabaci* (Gennadius) (Hemiptera: Aleyrodidae).

14. The method of any one of claims 1-7 and 10-13, the composition of any one of claims 8 and 10-13, or the use of any one of claims 9-13, wherein said (a) one or more fungal spores of a biological agent or biological control agent, and (b) one or more germinants are used simultaneously, separately or sequentially, optionally wherein:

said (a) one or more fungal spores of a biological agent or biological control agent,
and (b) one or more germinants are used simultaneously; and/or

(i) the one or more germinants comprises or consists of glycine betaine, and wherein glycine betaine is applied to soil or to the host, plant or plant part or is present in the composition at a concentration of at least 0.001 %, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%;
(ii) the one or more germinants comprises or consists of a yeast extract or inactive yeast, yeast cell walls, a yeast cell wall fraction, a yeast cell wall product, or a combination thereof, and wherein the yeast extract or the inactive yeast, yeast cell walls, yeast cell wall fraction, yeast cell wall product, or combination thereofis applied soil or to the host, plant or plant part or is present in the composition at a concentration of at least 0.001%, 0.002%, 0.003%, 0.004%, 0.005%, 0.006%, 0.007%, 0.008%, 0.009%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%; and/or
(iii) the one or more fungal spores of a biological agent or a biological control agent is applied to soil or to the host, plant or plant part or is present in the composition at a concentration of at least about $1 \times 10^6$, about $1 \times 10^7$, about $1 \times 10^8$, about $1 \times 10^9$, about $1 \times 10^{10}$, about $1 \times 10^{11}$ or about $1 \times 10^{12}$ CFU/g.

15. The method of of any one of claims 1-7 and 10-14, the composition of any one of claims 8 and 10-14, or the use of any one of claims 9-14, wherein:

(i) the plant or plant part are cereals, maize, rice, grasses, sugarcane, leguminous plants, forage crop, oil- and protein-rich plants, vegetable crops, fruit trees, viticulture crops, urban crops, or ornamental crops;

(ii) the one or more germinants comprises or consists of a yeast extract, and wherein the yeast extract is a soluble yeast extract; and/or
(iii) the one or more germinants comprises or consists of inactive yeast, yeast cell walls, a yeast cell wall fraction, a yeast cell wall product, or a combination thereof.

**Patentansprüche**

1. Verfahren zum Erhöhen der Keimungsrate einer Pilzspore, das das Inberührungbringen mit einem Wirt umfasst von: (a) einer oder mehreren Pilzsporen eines biologischen Mittels oder biologischen Bekämpfungsmittels, wobei die eine oder die mehreren Pilzsporen zu den Gattungen *Chlonostachys, Beauveria, Cordyceps, Serendipita,* oder *Trichoderma* gehören, und Kombinationen davon, und (b) einem oder mehreren Keimmitteln, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen.

2. Verfahren nach Anspruch 1, wobei:

   (i) bei Berührung der einen oder mehreren Pilzsporen und des einen oder der mehreren Keimmittel mit dem Wirt die eine oder die mehreren Pilzsporen des biologischen Mittels oder des biologischen Bekämpfungsmittels eine erhöhte Sporenkeimung im Vergleich zum Berühren der einen oder der mehreren Pilzsporen mit dem Wirt ohne das eine oder die mehreren Keimmittel aufweisen, und/oder
   (ii) der Wirt Erde, ein Schädling, eine Pflanze oder ein Pflanzenteil ist, wobei optional: der Pflanzenteil einen Samen umfasst oder aus diesem besteht; und/oder das Inberührungbringen das Aufbringen auf die Blätter der einen oder der mehreren Pilzsporen eines biologischen Bekämpfungsmittels und des einen oder der mehreren Keimmittel auf die Pflanze oder den Pflanzenteil umfasst.

3. Verfahren zum: Bekämpfen eines Pflanzenerregers oder eines Schädlings oder Schützen einer Pflanze vor einem Pflanzenerreger oder einem Schädling, wobei der Pflanzenerreger ein Pilz ist oder der Schädling ein Insektenschädling ist, wobei das Verfahren das Inberührungbringen von Erde, einem Schädling, einer Pflanze oder einem Pflanzenteil mit (a) einer oder mehreren Pilzsporen eines biologischen Mittels oder biologischen Bekämpfungsmittels, wobei die eine oder die mehreren Pilzsporen zu der Gattung *Chlonostachys, Beauveria,* oder *Cordyceps* gehören, und Kombinationen davon, und (b) einem oder mehreren Keimmitteln umfasst, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen, oder Verbessern des Wachstums, der Entwicklung und/oder der Produktivität einer Pflanze, wobei das Verfahren das Inberührungbringen von Erde, einem Schädling, einer Pflanze oder einem Pflanzenteil mit (a) einer oder mehreren Pilzsporen eines biologischen Mittels oder biologischen Bekämpfungsmittels, wobei die eine oder die mehreren Pilzsporen zu der Gattung *Serendipita* oder *Trichoderma* gehören, und Kombinationen davon, und (b) einem oder mehreren Keimmitteln umfasst, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen.

4. Verfahren zum Erhöhen der Wirksamkeit eines biologischen Mittels oder eines biologischen Bekämpfungsmittels, wobei das Verfahren das Inberührungbringen von Erde, einem Schädling, einer Pflanze oder einem Pflanzenteil mit (a) einer oder mehreren Pilzsporen eines biologischen Mittels oder biologischen Bekämpfungsmittels, wobei die eine oder die mehreren Pilzsporen zu den Gattungen *Chlonostachys, Beauveria, Cordyceps, Serendipita,* oder *Trichoderma* gehören, und Kombinationen davon, und (b) einem oder mehreren Keimmitteln, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen.

5. Verfahren nach Anspruch 3 oder 4, wobei bei der Berührung der einen oder der mehreren Pilzsporen und des einen oder der mehreren Keimstoffe mit Erde, dem Schädling, der Pflanze oder dem Pflanzenteil die einen oder die mehreren Pilzsporen des biologischen Bekämpfungsmittels einer verbesserten Wirksamkeit bei der Hemmung von Pflanzenerregern aufweisen oder eine erhöhte Schädlingsbekämpfung im Vergleich zu der Berührung der einen oder der mehreren Pilzsporen mit dem Wirt ohne das einen oder die mehreren Keimmittel aufweisen oder die eine oder die mehreren Pilzsporen des biologischen Mittels einer verbesserten Wirksamkeit bei der Verbesserung des Pflanzenwachstums, der Entwicklung und/oder der Produktivität aufweisen, optional wobei:

   (i) das Verbessern des Wachstums, der Entwicklung und/oder der Produktivität einer Pflanze das Verbessern von wenigstens einem der Folgenden umfasst: dem Grad der Mykorrhizierung, der Bewurzelung der Pflanze, dem Wachstum der Pflanze, der Höhe der Pflanze, der Blüte der Pflanze, der frischen Biomasse der Pflanze, der trockenen Biomasse der Pflanze, dem Ertrag der Pflanze, dem Nährstoffgehalt der Pflanze, der Resistenz der Pflanze gegenüber abiotischen Stressfaktoren und Kombinationen davon, und/oder

(ii) der Pflanzenteil einen Samen enthält oder aus diesem besteht.

6. Verfahren nach einem der Ansprüche 3 bis 5, wobei das Inberührungbringen das Aufbringen auf die Blätter der einen oder der mehreren Pilzsporen eines biologischen Bekämpfungsmittels und des einen oder der mehreren Keimmittel auf die Pflanze oder den Pflanzenteil umfasst.

7. Verfahren zum Herstellen einer Zusammensetzung, umfassend das Mischen von (a) einer oder mehreren Pilzsporen eines biologischen Mittels oder biologischen Bekämpfungsmittels, wobei die eine oder die mehreren Pilzsporen zu den Gattungen *Chlonostachys, Beauveria, Cordyceps, Serendipita,* oder *Trichoderma* gehören, und (b) einem oder mehreren Keimmitteln, um eine Zusammensetzung zu erhalten, die (a) die eine oder die mehreren Pilzsporen eines biologischen Mittels oder biologischen Bekämpfungsmittels und (b) das eine oder die mehreren Keimmittel umfasst, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen, optional wobei:

(i) das Verfahren ferner das Mischen der (a) einen oder der mehreren Pilzsporen eines biologischen Mittels oder biologischen Bekämpfungsmittels und (b) eines oder mehrerer Keimmittel mit (c) einem Träger umfasst, um eine Zusammensetzung zu erhalten, die (a) die eine oder die mehreren Pilzsporen eines biologischen Mittels oder biologischen Bekämpfungsmittels, (b) das eine oder die mehreren Keimmittel und (c) den Träger umfasst, und/oder

(ii) die Zusammensetzung zum Bekämpfen eines Pflanzenerregers oder eines Schädlings oder zum Verbessern des Wachstums, der Entwicklung und/oder der Produktivität einer Pflanze dient.

8. Zusammensetzung zum Bekämpfen eines Pflanzenerregers oder eines Schädlings oder zum Verbessern des Wachstums, der Entwicklung und/oder der Produktivität einer Pflanze, wobei die Zusammensetzung umfasst: (a) eine oder mehrere Pilzsporen eines biologischen Mittels oder biologischen Bekämpfungsmittels, wobei die eine oder die mehreren Pilzsporen zu den Gattungen *Chlonostachys, Beauveria, Cordyceps, Serendipita,* oder *Trichoderma* gehören, und Kombinationen davon, und (b) ein oder mehrere Keimmittel, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen; optional ferner umfassend (c) einen Träger.

9. Verwendung einer wirksamen Menge von: (a) einer oder mehreren Pilzsporen eines biologischen Mittels oder biologischen Bekämpfungsmittels, wobei die eine oder die mehreren Pilzsporen zu den Gattungen *Chlonostachys, Beauveria, Cordyceps, Serendipita,* oder *Trichoderma* gehören, und Kombinationen davon, und (b) einem oder mehreren Keimmitteln zum Verbessern der Keimrate der einen oder der mehreren Pilzsporen eines biologischen Mittels oder eines biologischen Bekämpfungsmittels, wobei das eine oder die mehreren Keimmittel Glycinbetain, einen Hefeextrakt, inaktive Hefe, Hefezellwände, eine Hefezellwandfraktion, ein Hefezellwandprodukt oder eine Kombination davon umfassen, optional wobei die Verwendung:

(i) die Keimrate der einen oder der mehreren Pilzsporen eines biologischen Mittels oder biologischen Bekämpfungsmittels erhöht, wobei dadurch ein Pflanzenerreger oder Schädling bekämpft oder das Wachstum, die Entwicklung und/oder die Produktivität einer Pflanze verbessert wird;

(ii) die Keimrate und die antimikrobielle Aktivität oder die pestizide Aktivität der einen oder der Pilzsporen des biologischen Bekämpfungsmittels im Vergleich zu der Keimrate und der antimikrobiellen Aktivität oder der pestiziden Aktivität der einen oder der mehreren Pilzsporen eines biologischen Bekämpfungsmittels bei Verwendung ohne das eine oder die mehreren Keimungsmittel erhöht wird; und/oder

(iii) die Keimrate und die Wirksamkeit bei der Verbesserung des Pflanzenwachstums, der Entwicklung und/oder der Produktivität der einen oder der mehreren Pilzsporen des biologischen Mittels im Vergleich zu der Keimrate und der Wirksamkeit bei der Verbesserung des Pflanzenwachstums, der Entwicklung und/oder der Produktivität der einen oder der mehreren Pilzsporen des biologischen Bekämpfungsmittels bei Verwendung ohne das eine oder die mehreren Keimungsmittel erhöht wird.

10. Verfahren nach einem der Ansprüche 1-7, Zusammensetzung nach Anspruch 8 oder Verwendung nach Anspruch 9, wobei das eine oder die mehreren Keimmittel umfassen:

(i) Glycinbetain;

(ii) einen Hefeextrakt, inaktive Hefe, Hefezellwände, eine Hefezellwandfraktion, ein Hefezellwandprodukt oder eine Kombination davon, wobei das eine oder die mehreren Keimmittel vorzugsweise einen Hefeextrakt umfassen; oder

(iii) eine Kombination aus Glycinbetain und einem Hefeextrakt, inaktiver Hefe, Hefezellwänden, einer Hefezellwandfraktion, einem Hefezellwandprodukt oder einer Kombination davon, wobei das eine oder die mehreren Keimmittel vorzugsweise eine Kombination aus Glycinbetain und einem Hefeextrakt umfassen.

11. Verfahren nach einem der Ansprüche 1-7 und 10, Zusammensetzung nach Anspruch 8 und 10 oder Verwendung nach Anspruch 9 und 10, wobei die eine oder die mehreren Pilzsporen zu der Gattung *Chlonostachys rosea* var. *catenulatum, Beauveria bassiana, Cordycepsjavanica, Trichoderma asperellum* oder Kombinationen davon gehören, wobei die eine oder die mehreren Pilzsporen optional sind:

(i) eine oder mehrere entomopathogene Pilzsporen, wobei es sich bei der einen oder den mehreren entomopathogenen Pilzsporen optional um eine oder mehrere entomopathogene Pilzsporen von *Beauveria bassiana, Cordycepsjavanica,* oder Kombinationen davon handelt; und/oder

(ii) eine oder mehrere Konidien oder Chlamydosporen; oder

(iii) eine oder mehrere Pilzsporen von *Chlonostachys rosea* var. *catenulatum,* optional wobei es sich bei *Chlonostachys rosea* var. *catenulatum* um C. *rosea f. catenulata* handelt, optional wobei es sich bei C. *rosea f. catenulata* um Stamm J1446 handelt.

12. Verfahren nach einem der Ansprüche 1-7, 10 und 11, Zusammensetzung nach einem der Ansprüche 8, 10 und 11 oder Verwendung nach einem der Ansprüche 9-11, wobei:

(i) die eine oder die mehreren Pilzsporen eines biologischen Bekämpfungsmittels eine oder mehrere Sporen von C. *rosea f. catenulata* sind und das eine oder mehrere Keimmittel Glycinbetain umfasst, optional wobei es sich bei C. *rosea f. catenulata* um den Stamm J1446 handelt;

(ii) die eine oder die mehreren Pilzsporen eines biologischen Bekämpfungsmittels eine oder mehrere Sporen von C. *rosea f. catenulata* sind und das eine oder die mehreren Keimmittel einen Hefeextrakt oder inaktive Hefe, Hefezellwände, eine Hefezellwandfraktion, ein Hefezellwandprodukt oder eine Kombination davon umfassen, wobei das eine oder die mehreren Keimmittel vorzugsweise einen Hefeextrakt umfassen und optional wobei C. *rosea f. catenulata* der Stamm J1446 ist;

(iii) die eine oder die mehreren Pilzsporen eines biologischen Bekämpfungsmittels eine oder mehrere Sporen von C. *rosea f. catenulata* sind und das eine oder die mehreren Keimmittel eine Kombination auf Glycinbetain und einem Hefeextrakt oder inaktiver Hefe, Hefezellwänden, einer Hefezellwandfraktion, einem Hefezellwandprodukt oder einer Kombination davon umfassen, wobei das eine oder die mehreren Keimmittel vorzugsweise eine Kombination aus Glycinbetain und einem Hefeextrakt umfassen und optional wobei C. *rosea f. catenulata* der Stamm J1446 ist;

(iv) die eine oder die mehreren Pilzsporen eines biologischen Bekämpfungsmittels eine oder mehrere Sporen von *Beauveria bassiana* sind und das eine oder die mehreren Keimmittel Glycinbetain umfasst;

(v) die eine oder die mehreren Pilzsporen eines biologischen Bekämpfungsmittels eine oder mehrere Sporen von *Beauveria bassiana* sind und das eine oder die mehreren Keimmittel einen Hefeextrakt oder inaktive Hefe, Hefezellwände, eine Hefezellwandfraktion, ein Hefezellwandprodukt oder eine Kombination davon umfassen, wobei das eine oder die mehreren Keimmittel vorzugsweise einen Hefeextrakt umfassen;

(vi) die eine oder die mehreren Pilzsporen eines biologischen Bekämpfungsmittels eine oder mehrere Sporen von *Beauveria bassiana* sind und das eine oder die mehreren Keimmittel eine Kombination auf Glycinbetain und einem Hefeextrakt oder inaktiver Hefe, Hefezellwänden, einer Hefezellwandfraktion, einem Hefezellwandprodukt oder einer Kombination davon umfassen, wobei das eine oder die mehreren Keimmittel vorzugsweise eine Kombination aus Glycinbetain und einem Hefeextrakt umfassen;

(vii) die eine oder die mehreren Pilzsporen eines biologischen Bekämpfungsmittels eine oder mehrere Sporen von *Cordycepsjavanica* sind und das eine oder die mehreren Keimmittel Glycinbetain umfasst;

(viii) die eine oder die mehreren Pilzsporen eines biologischen Bekämpfungsmittels eine oder mehrere Sporen von *Cordycepsjavanica* sind und das eine oder die mehreren Keimmittel einen Hefeextrakt oder inaktive Hefe, Hefezellwände, eine Hefezellwandfraktion, ein Hefezellwandprodukt oder eine Kombination davon umfassen, wobei das eine oder die mehreren Keimmittel vorzugsweise einen Hefeextrakt umfassen;

(ix) die eine oder die mehreren Pilzsporen eines biologischen Bekämpfungsmittels eine oder mehrere Sporen von *Cordycepsjavanica* sind und das eine oder die mehreren Keimmittel eine Kombination auf Glycinbetain und einem Hefeextrakt oder inaktiver Hefe, Hefezellwänden, einer Hefezellwandfraktion, einem Hefezellwandprodukt oder einer Kombination davon umfassen, wobei das eine oder die mehreren Keimmittel vorzugsweise eine Kombination aus Glycinbetain und einem Hefeextrakt umfassen;

(x) die eine oder die mehreren Pilzsporen eines biologischen Mittels eine oder mehrere Sporen von *Trichoderma asperellum* sind und das eine oder die mehreren Keimmittel Glycinbetain umfasst;

(xi) die eine oder die mehreren Pilzsporen eines biologischen Mittels eine oder mehrere Sporen von *Trichoderma asperellum* sind und das eine oder die mehreren Keimmittel einen Hefeextrakt oder inaktive Hefe, Hefezellwände, eine Hefezellwandfraktion, ein Hefezellwandprodukt oder eine Kombination davon umfassen, wobei das eine oder die mehreren Keimmittel vorzugsweise einen Hefeextrakt umfassen; oder

(xii) die eine oder die mehreren Pilzsporen eines biologischen Mittels eine oder mehrere Sporen von *Cordycepsjavanica* sind und das eine oder die mehreren Keimmittel eine Kombination auf Glycinbetain und einem Hefeextrakt oder inaktiver Hefe, Hefezellwänden, einer Hefezellwandfraktion, einem Hefezellwandprodukt oder einer Kombination davon Derivat umfassen, wobei das eine oder die mehreren Keimmittel vorzugsweise eine Kombination aus Glycinbetain und einem Hefeextrakt umfassen.

**13.** Verfahren nach einem der Ansprüche 1-7 und 10-12, Zusammensetzung nach einem der Ansprüche 8, 10-12 oder Verwendung nach einem der Ansprüche 9-12, wobei:

A) der Pilz zu den Gattungen *Botrytis*, *Erysiphe*, *Rhizoctonia*, *Venturia*, *Didymella*, *Fusarium*, *Pseudoidium*, *Podosphaera* und Kombinationen davon gehört, wobei optional:

(i) der Pilz zu der Gattung *Botrytis* gehört, wobei es sich bei dem Pilz vorzugsweise um *Botrytis cinerea* handelt;

(ii) der Pilz zu der Gattung *Erysiphe* gehört, wobei es sich bei dem Pilz vorzugsweise um *Erysiphe necator* handelt;

(iii) der Pilz zu der Gattung *Rhizoctonia* gehört, wobei es sich bei dem Pilz vorzugsweise um *Rhizoctonia solani*, *Rhizoctonia bataticola; Rhizoctonia fragariae; Rhizoctonia leguminicola* oder *Rhizoctonia oryzae* handelt, wobei es sich beim dem Pils vorzugsweise um *Rhizoctonia solani* handelt;

(iv) der Pilz zu der Gattung Venturia gehört, wobei es sich bei dem Pilz vorzugsweise um *Venturia inaequalis* handelt;

(v) der Pilz zu der Gattung *Pseudoidium* gehört, wobei es sich bei dem Pilz vorzugsweise um *Pseudoidium neolycopersici* handelt; oder

(vi) der Pilz zu der Gattung *Podosphaera* gehört, wobei es sich bei dem Pilz vorzugsweise um *Podosphaera xanthii* handelt; oder

B) der Insektenschädling zu den Gattungen *Diuraphis noxia, Bemisia argentifolii, Bemisia tabaci, Trialeurodes vaporariorum, Aleyrodes lonicerae, Diaphorina citri, Euphyllura olivine, Aphis gossypii, Myzus persicae, Macrosiphum euphorbiae, Aulacorthum solani, Heliothrips haemorrhoidalis, Frankliniella occidentalis, Frankliniella schulzei, Thrips tabaci, Scirtothrips dorsalis, Hercinothrips femoralis, Dalbulus maidis, Phenacoccus solenopsis, Pseudococcus longispinus, Paracoccus marginatus, Mahanarva fimbriolata, Deois flavopicta, Zulia entreriana, Notozulia entreriana, Hypothenemus hampei, Hedypathes betulinus, Cosmopolites sordidus, Gonipterus scutellatus, Agriotes spp., Plutella xyllostella, Helicoverpa armigera, Otiorhyncus sultacus, Fungus gnats, Exomala orientalis, Sciaridae, Otiorhynchus sulcatus, Strophosoma melanogrammum, S. capitatum, Phyllopertha horticola, Amphimallon solstitialis, Daktulosphaira vitifoliae, Diabrotica virgifera Spodoptera* spp, *Oligonychus ilicis, Planococcus citri, Anthonomus grandis, Brevicoryne brassicae* oder *Sphenophorus levis* gehört; wobei der Insektenschädling optional zu der Gattung *Bemisia tabaci, Bemisia argentifolii, Trialeurodes vaporariorum, Hypothenemus hampei, Cosmopolites sordidus, Sphenophorus levis, Anthonomus grandis, Diaphorina citri, Helicoverpa armigera, Frankliniella occidentalis, Frankliniella schulzei, Thrips tabaci, Aphis gossypii, Myzus persicae, Oligonychus ilicis, Planococcus citri, Mahanarvafimbriolata, Agriotes spp, Diabrotica spp* oder *Dalbulus maidis,* wobei es sich bei dem Insektenschädling vorzugsweise um *Bemisia tabaci* (Gennadius) (Hemiptera: Aleyrodidae) handelt.

**14.** Verfahren nach einem der Ansprüche 1-7 und 10-13, Zusammensetzung nach einem der Ansprüche 8 und 10-13 oder Verwendung nach einem der Ansprüche 9-13, wobei (a) ein oder mehrere Pilzsporen eines biologischen Mittels oder biologischen Bekämpfungsmittels und (b) ein oder mehrere Keimmittel gleichzeitig, getrennt oder nacheinander verwendet werden, optional wobei:

die (a) eine oder die mehreren Pilzsporen eines biologischen Mittels oder biologischen Bekämpfungsmittels und (b) ein oder mehrere Keimmittel gleichzeitig verwendet werden; und/oder

(i) das eine oder die mehreren Keimmittel Glycinbetain umfassen oder daraus bestehen, und wobei Glycinbetain auf Erde oder auf den Wirt, die Pflanze oder den Pflanzenteil angewendet wird oder in der Zusammensetzung in einer Konzentration von wenigstens 0,001 %, 0,002 %, 0,003 %, 0,004 %, 0,005 %, 0,006 %, 0,007 %, 0,008 %, 0,009 %, 0,01 %, 0,02 %, 0,03 %, 0,04 %, 0,05 %, 0,06 %, 0,07 %, 0,08 %, 0,09 %, 0,1 %, 0,2 %, 0,3 %, 0,4 %, 0,5 %, 0,6 %, 0,7 %, 0,8 %, 0,9 %, 1 %, 1,5 %, 2 %, 2,5 %, 3 %, 3,5 %, 4 %, 4,5 % oder 5 % vorhanden ist;
(ii) das eine oder die mehreren Keimmittel einen Hefeextrakt oder inaktive Hefe, Hefezellwände, eine Hefezellwandfraktion, ein Hefezellwandprodukt oder eine Kombination davon umfassen oder daraus bestehen, und wobei der Hefeextrakt oder die inaktive Hefe, Hefezellwände, Hefezellwandfraktion, das Hefezellwandprodukt oder die Kombination daraus auf Erde oder auf den Wirt, die Pflanze oder den Pflanzenteil angewendet wird oder in der Zusammensetzung in einer Konzentration von wenigstens 0,001 %, 0,002 %, 0,003 %, 0,004 %, 0,005 %, 0,006 %, 0,007 %, 0,008 %, 0,009 %, 0,01 %, 0,02 %, 0,03 %, 0,04 %, 0,05 %, 0,06 %, 0,07 %, 0,08 %, 0,09 %, 0,1 %, 0,2 %, 0,3 %, 0,4 %, 0,5 %, 0,6 %, 0,7 %, 0,8 %, 0,9 %, 1 %, 1,5 %, 2 %, 2,5 %, 3 %, 3,5 %, 4 %, 4,5 % oder 5 % vorhanden ist; und/oder
(iii) die eine oder die mehreren Pilzsporen eines biologischen Mittels oder eines biologischen Bekämpfungsmittels auf Erde oder auf den Wirt, die Pflanze oder den Pflanzenteil angewendet werden oder in der Zusammensetzung in einer Konzentration von wenigstens etwa $1\times10^6$, etwa $1\times10^7$, etwa $1\times10^8$, etwa $1\times10^9$, etwa $1\times10^{10}$, etwa $1\times10^{11}$ oder etwa $1\times10^{12}$ KBE/g vorhanden sind.

15. Verfahren nach einem der Ansprüche 1-7 und 10-14, Zusammensetzung nach einem der Ansprüche 8 und 10-14 oder Verwendung nach einem der Ansprüche 9-14, wobei:

(i) die Pflanze oder der Pflanzenteil Getreide, Mais, Reis, Gräser, Zuckerrohr, Hülsenfrüchte, Futterpflanzen, öl- und eiweißreiche Pflanzen, Gemüsepflanzen, Obstbäume, Weinbaukulturen, städtische Kulturen oder Zierpflanzen ist;
(ii) das eine oder die mehreren Keimmittel einen Hefeextrakt umfassen oder aus diesem bestehen, und wobei der Hefeextrakt ein löslicher Hefeextrakt ist; und/oder
(iii) das eine oder die mehreren Keimmittel inaktive Hefe, Hefezellwände, eine Hefezellwandfraktion, ein Hefezellwandprodukt oder eine Kombination davon umfassen oder daraus bestehen.

## Revendications

1. Procédé d'amélioration du taux de germination d'une spore fongique comprenant la mise en contact avec un hôte : (a) d'une ou plusieurs spores fongiques d'un agent biologique ou d'un agent de lutte biologique, la ou lesdites spores fongiques appartenant au genre *Clonostachys, Beauveria, Cordyceps, Serendipita* ou *Trichoderma,* et des combinaisons de ceux-ci, et (b) d'un ou plusieurs agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci.

2. Procédé selon la revendication 1, dans lequel :

(i) au contact de la ou desdites spores fongiques et du ou desdits agents de germination avec l'hôte, la ou lesdites spores fongiques de l'agent biologique ou de l'agent de lutte biologique présentent une germination accrue des spores en comparaison d'une mise en contact d'une ou plusieurs spores fongiques avec l'hôte sans le ou lesdits agents de germination ; et/ou
(ii) l'hôte est de la terre, un ravageur, une plante ou une partie de plante ; étant entendu éventuellement que la partie de plante comprend ou consiste en une semence ; et/ou la mise en contact comprend l'application foliaire à la plante ou à la partie de plante de la ou desdites spores fongiques d'un agent de lutte biologique et du ou desdits agents de germination.

3. Procédé permettant : de contrôler un phytopathogène ou un ravageur ou protéger une plante contre un phytopathogène ou un ravageur, ledit phytopathogène étant un champignon ou le ravageur étant un insecte ravageur, ledit procédé comprenant une mise en contact de terre, d'un ravageur, d'une plante ou d'une partie de plante avec (a) une ou plusieurs spores fongiques d'un agent biologique ou d'un agent de lutte biologique, la ou lesdites spores fongiques appartenant au genre *Clonostachys, Beauveria* ou *Cordyceps,* et des combinaisons de ceux-ci, et (b) un ou plusieurs agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci ; ou d'améliorer la croissance, le développement et/ou la productivité d'une plante, ledit procédé comprenant une mise en contact de terre, d'un ravageur, d'une plante ou d'une partie de plante avec (a) une ou plusieurs spores fongiques d'un agent biologique ou d'un agent de lutte biologique, la ou lesdites spores fongiques appartenant au genre *Serendipita* ou *Trichoderma,* et des combinaisons de ceux-ci, et (b) un ou plusieurs agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci.

4. Procédé d'amélioration de l'efficacité d'un agent biologique ou d'un agent de lutte biologique, ledit procédé comprenant la mise en contact de terre, d'un ravageur, d'une plante ou d'une partie de plante avec (a) une ou plusieurs spores fongiques d'un agent biologique ou d'un agent de lutte biologique, la ou lesdites spores fongiques appartenant au genre *Clonostachys, Beauveria, Cordyceps, Serendipita* ou *Trichoderma,* et des combinaisons de ceux-ci, et (b) un ou plusieurs agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci.

5. Procédé selon la revendication 3 ou 4, dans lequel, au contact de la ou desdites spores fongiques et du ou desdits agents de germination avec de la terre, le ravageur, la plante ou la partie de plante, la ou lesdites spores fongiques de l'agent de lutte biologique présentent une efficacité améliorée dans l'inhibition des phytopathogènes ou favorisent une lutte accrue contre les ravageurs en comparaison d'une mise en contact d'une ou plusieurs spores fongiques avec l'hôte sans le ou lesdits agents de germination, ou la ou lesdites spores fongiques de l'agent biologique présentent une efficacité améliorée dans l'amélioration de la croissance, du développement et/ou de la productivité de la plante, étant entendu éventuellement que :

   (i) l'amélioration de la croissance, du développement et/ou de la productivité d'une plante comprend l'amélioration d'au moins un des aspects suivants : le degré de mycorhization, l'enracinement de la plante, la croissance de la plante, la hauteur de la plante, la floraison de la plante, la biomasse fraîche de la plante, la biomasse sèche de la plante, le rendement de la plante, la nutrition de la plante, la résistance de la plante aux stress abiotiques, et des combinaisons de ceux-ci ; et/ou
   (ii) la partie de plante comprend ou consiste en une semence.

6. Procédé selon l'une quelconque des revendications 3 à 5, dans lequel la mise en contact comprend l'application foliaire à la plante ou à la partie de plante de la ou desdites spores fongiques d'un agent de lutte biologique et du ou desdits agents de germination.

7. Procédé de fabrication d'une composition comprenant le mélange (a) d'une ou plusieurs spores fongiques d'un agent biologique ou d'un agent de lutte biologique, la ou lesdites spores fongiques appartenant au genre *Clonostachys, Beauveria, Cordyceps, Serendipita* ou *Trichoderma,* et des combinaisons de ceux-ci, et (b) d'un ou plusieurs agents de germination afin d'obtenir une composition comprenant (a) la ou lesdites spores fongiques d'un agent biologique ou d'un agent de lutte biologique et (b) le ou lesdits agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci, étant entendu éventuellement que :

   (i) le procédé comprend en outre le mélange (a) d'une ou plusieurs spores fongiques d'un agent biologique ou d'un agent de lutte biologique et (b) d'un ou plusieurs agents de germination avec (c) un support, afin d'obtenir une composition comprenant (a) la ou lesdites spores fongiques d'un agent biologique ou d'un agent de lutte biologique, (b) le ou lesdits agents de germination et (c) le support ; et/ou
   (ii) ladite composition est destinée à réguler un phytopathogène ou un ravageur ou à améliorer la croissance, le développement et/ou la productivité d'une plante.

8. Composition destinée à réguler un phytopathogène ou un ravageur ou à améliorer la croissance, le développement et/ou la productivité d'une plante, ladite composition comprenant (a) une ou plusieurs spores fongiques d'un agent biologique ou d'un agent de lutte biologique, la ou lesdites spores fongiques appartenant au genre *Clonostachys, Beauveria, Cordyceps, Serendipita* ou *Trichoderma,* et des combinaisons de ceux-ci ; et (b) un ou plusieurs agents de germination, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci ; comprenant éventuellement en outre (c) un support.

**9.** Utilisation d'une quantité efficace (a) d'une ou plusieurs spores fongiques d'un agent biologique ou d'un agent de lutte biologique, la ou lesdites spores fongiques appartenant au genre *Clonostachys, Beauveria, Cordyceps, Serendipita* ou *Trichoderma,* et des combinaisons de ceux-ci, et (b) d'un ou plusieurs agents de germination pour améliorer le taux de germination de la ou desdites spores fongiques d'un agent biologique ou d'un agent de lutte biologique, le ou lesdits agents de germination comprenant la glycine bétaïne, un extrait de levure, une levure inactive, des parois cellulaires de levure, une fraction de paroi cellulaire de levure, un produit de paroi cellulaire de levure, ou une combinaison de ceux-ci, étant entendu éventuellement que ladite utilisation :

(i) améliore le taux de germination de la ou desdites spores fongiques d'un agent biologique ou d'un agent de lutte biologique, permettant ainsi de réguler un phytopathogène ou un ravageur ou d'améliorer la croissance, le développement et/ou la productivité d'une plante ;

(ii) améliore le taux de germination et l'activité antimicrobienne ou l'activité pesticide de la ou desdites spores fongiques de l'agent de lutte biologique en comparaison du taux de germination et de l'activité antimicrobienne ou pesticide de la ou desdites spores fongiques d'un agent de lutte biologique utilisées sans le ou lesdits agents de germination ; et/ou

(iii) améliore le taux de germination et l'efficacité de l'amélioration de la croissance, du développement et/ou de la productivité de la ou desdites spores fongiques de l'agent biologique en comparaison du taux de germination et de l'efficacité de l'amélioration de la croissance, du développement et/ou de la productivité de la ou desdites spores fongiques de l'agent de lutte biologique utilisées sans le ou lesdits agents de germination.

**10.** Procédé selon l'une quelconque des revendications 1 à 7, composition selon la revendication 8, ou utilisation selon la revendication 9, dans lesquels le ou lesdits agents de germination comprennent :

(i) la glycine bétaïne ;

(ii) un extrait de levure, une levure inactive, des parois cellulaires de levure, une fraction de paroi cellulaire de levure, un produit de paroi cellulaire de levure, ou une combinaison de ceux-ci, le ou lesdits agents de germination comprenant de préférence un extrait de levure ; ou

(iii) une combinaison de glycine bétaïne et d'un extrait de levure, d'une levure inactive, de parois cellulaires de levure, d'une fraction de paroi cellulaire de levure, d'un produit de paroi cellulaire de levure, ou d'une combinaison de ceux-ci, le ou lesdits agents de germination comprenant de préférence une combinaison de glycine bétaïne et d'un extrait de levure.

**11.** Procédé selon l'une quelconque des revendications 1 à 7 et 10, composition selon les revendications 8 et 10, ou utilisation selon les revendications 9 et 10, dans lesquels la ou lesdites spores fongiques appartiennent aux espèces *Clonostachys rosea var. catenulatum, Beauveria bassiana, Cordyceps javanica, Trichoderma asperellum,* ou des combinaisons de celles-ci, la ou lesdites spores fongiques étant éventuellement :

(i) une ou plusieurs spores fongiques entomopathogènes, la ou lesdites spores fongiques entomopathogènes étant éventuellement une ou plusieurs spores fongiques entomopathogènes de *Beauveria bassiana, Cordyceps javanica,* ou des combinaisons de celles-ci ; et/ou

(ii) une ou plusieurs conidies ou chlamydospores ; ou

(iii) une ou plusieurs spores fongiques de *Clonostachys rosea var. catenulatum,* le *Clonostachys rosea var. catenulatum* étant éventuellement *C. rosea f. catenulata,* le *C. rosea f. catenulata* étant éventuellement la souche J1446.

**12.** Procédé selon l'une quelconque des revendications 1 à 7, 10 et 11, composition selon l'une quelconque des revendications 8, 10 et 11, ou utilisation selon l'une quelconque des revendications 9 à 11, dans lequel :

(i) la ou lesdites spores fongiques d'un agent de lutte biologique sont une ou plusieurs spores de *C. rosea f. catenulata* et le ou lesdits agents de germination comprennent la glycine bétaïne, le *C. rosea f. catenulata* étant éventuellement la souche J1446 ;

(ii) la ou lesdites spores fongiques d'un agent de lutte biologique sont une ou plusieurs spores de *C. rosea f. catenulata* et le ou lesdits agents de germination comprennent un extrait de levure ou une levure inactive, des parois cellulaires de levure, une fraction de paroi cellulaire de levure, un produit de paroi cellulaire de levure, ou une combinaison de ceux-ci, le ou lesdits agents de germination comprenant de préférence un extrait de levure, et le *C. rosea f. catenulata* étant éventuellement la souche J1446 ;

(iii) la ou lesdites spores fongiques d'un agent de lutte biologique sont une ou plusieurs spores de *C. rosea f. catenulata* et le ou lesdits agents de germination comprennent une combinaison de glycine bétaïne et d'un extrait de levure ou de levure inactive, de parois cellulaires de levure, d'une fraction de paroi cellulaire de levure, d'un produit de paroi cellulaire de levure ou d'une combinaison de ceux-ci, le ou lesdits agents de germination comprenant de préférence une combinaison de glycine bétaïne et d'un extrait de levure, et le *C. rosea f. catenulata* étant éventuellement la souche J1446 ;

(iv) la ou lesdites spores fongiques d'un agent de lutte biologique sont une ou plusieurs spores de *Beauveria bassiana* et le ou lesdits agents de germination comprennent la glycine bétaïne ;

(v) la ou lesdites spores fongiques d'un agent de lutte biologique sont une ou plusieurs spores de *Beauveria bassiana* et le ou lesdits agents de germination comprennent un extrait de levure ou une levure inactive, des parois cellulaires de levure, une fraction de paroi cellulaire de levure, un produit de paroi cellulaire de levure ou une combinaison de ceux-ci, le ou lesdits agents de germination comprenant de préférence un extrait de levure ;

(vi) la ou lesdites spores fongiques d'un agent de lutte biologique sont une ou plusieurs spores de *Beauveria bassiana* et le ou lesdits agents de germination comprennent une combinaison de glycine bétaïne et d'un extrait de levure ou d'une levure inactive, de parois cellulaires de levure, d'une fraction de paroi cellulaire de levure, d'un produit de paroi cellulaire de levure, ou d'une combinaison de ceux-ci, le ou lesdits agents de germination comprenant de préférence une combinaison de glycine bétaïne et d'un extrait de levure ;

(vii) la ou lesdites spores fongiques d'un agent de lutte biologique sont une ou plusieurs spores de *Cordyceps javanica* et le ou lesdits agents de germination comprennent la glycine bétaïne ;

(viii) la ou lesdites spores fongiques d'un agent de lutte biologique sont une ou plusieurs spores de Cordyceps javanica et le ou lesdits agents de germination comprennent un extrait de levure ou une levure inactive, des parois cellulaires de levure, une fraction de paroi cellulaire de levure, un produit de paroi cellulaire de levure, ou une combinaison de ceux-ci, le ou lesdits agents de germination comprenant de préférence un extrait de levure ;

(ix) la ou lesdites spores fongiques d'un agent de lutte biologique sont une ou plusieurs spores de *Cordyceps javanica* et le ou lesdits agents de germination comprennent une combinaison de glycine bétaïne et d'un extrait de levure ou d'une levure inactive, de parois cellulaires de levure, d'une fraction de paroi cellulaire de levure, d'un produit de paroi cellulaire de levure, ou d'une combinaison de ceux-ci, le ou lesdits agents de germination comprenant de préférence une combinaison de glycine bétaïne et d'un extrait de levure ;

(x) la ou lesdites spores fongiques d'un agent biologique sont une ou plusieurs spores de *Trichoderma asperellum* et le ou lesdits agents de germination comprennent la glycine bétaïne ;

(xi) la ou lesdites spores fongiques d'un agent biologique sont une ou plusieurs spores de *Trichoderma asperellum* et le ou lesdits agents de germination comprennent un extrait de levure ou une levure inactive, des parois cellulaires de levure, une fraction de paroi cellulaire de levure, un produit de paroi cellulaire de levure, ou une combinaison de ceux-ci, le ou lesdits agents de germination comprenant de préférence de l'extrait de levure ; ou

(xii) la ou lesdites spores fongiques d'un agent biologique sont une ou plusieurs spores de *Trichoderma asperellum* et le ou lesdits agents de germination comprennent une combinaison de glycine bétaïne et d'un extrait de levure ou d'une levure inactive, de parois cellulaires de levure, d'une fraction de paroi cellulaire de levure, d'un produit de paroi cellulaire de levure, ou d'une combinaison de ceux-ci, le ou lesdits germinants comprenant de préférence une combinaison de glycine bétaïne et d'un extrait de levure.

**13.** Procédé selon l'une quelconque des revendications 1 à 7 et 10 à 12, composition selon l'une quelconque des revendications 8 et 10 à 12, ou utilisation selon l'une quelconque des revendications 9 à 12, dans lesquels :

A) le champignon appartient au genre *Botrytis, Erysiphe, Rhizoctonia, Venturia, Didymella, Fusarium, Pseudoidium, Podosphaera* et des combinaisons de ceux-ci, étant entendu éventuellement que :

(i) le champignon appartient au genre *Botrytis,* et est de préférence *Botrytis cinerea* ;
(ii) le champignon appartient au genre *Erysiphe,* et est de préférence *Erysiphe necotor* ;
(iii) le champignon appartient au genre *Rhizoctonia,* et est de préférence *Rhizoctonia solani, Rhizoctonia bataticola, Rhizoctonia fragariae, Rhizoctonia leguminicola* ou *Rhizoctonia oryzae,* de préférence *Rhizoctonia solani* ;
(iv) le champignon appartient au genre *Venturia,* et est de préférence *Venturia incequalis* ;
(v) le champignon appartient au genre *Pseudoidium,* et est de préférence *Pseudoidium neolycopersici* ; ou
(vi) le champignon appartient au genre *Podosphaera,* et est de préférence *Podosphaera xanthii* ; ou

B) l'insecte ravageur appartient à l'espèce *Diuraphis noxia, Bemisio argentifolii, Bemisia tabaci, Trialeurodes vaporariorum, Aleyrodes lonicerae, Diaphorina citri, Euphyllura olivine, Aphis gossypii, Myzus persicae, Macrosiphum euphorbiae, Aulacorthum solani, Heliothrips haemorrhoidalis, Frankliniella occidentalis, Frankliniella*

*schulzei, Thrips tabaci, Scirtothrips dorsalis, Hercinothrips femoralis, Dalbulus maidis, Phenococcus solenopsis, Pseudococcus longispinus, Paracoccus marginatus, Mahanarva fimbriolata, Deois flavopicta, Zulia entreriana, Notozulia entreriana, Hypothenemus hampei, Hedypathes betulinus, Cosmopolites sordidus, Gonipterus scutellatus, Agriotes spp., Plutella xyllostella, Helicoverpa armigera, Otiorhyncus sultacus,* moucherons fongiques, *Exomala orientalis, Sciaridae, Otiorhynchus sulcatus, Strophosomo melanogrammum, S. capitatum, Phyllopertha horticolo, Amphimallon solstitialis, Daktulosphaira vitifoliae, Diabrotica virgifera Spodoptera spp, Oligonychus ilicis, Planococcus citri, Anthonomus grandis, Brevicoryne brassicae* ou *Sphenophorus levis* ;

l'insecte ravageur appartenant éventuellement à l'espèce *Bemisia tabaci, Bemisia argentifolii, Trialeurodes vaporariorum, Hypothenemus hampei, Cosmopolites sordidus, Sphenophorus levis, Anthonomus grandis, Diaphorina citri, Helicoverpa armigera, Frankliniella occidentalis, Frankliniella schulzei, Thrips tabaci, Aphis gossypii, Myzus persicae, Oligonychus ilicis, Planococcus citri, Mahanarva fimbriolata, Agriotes spp, Diabrotica spp* ou *Dalbulus maidis,* l'insecte ravageur étant de préférence *Bemisia tabaci* (Gennadius) (Hemiptera : Aleyrodidae).

14. Procédé selon l'une quelconque des revendications 1 à 7 et 10 à 13, composition selon l'une quelconque des revendications 8 et 10 à 13, ou utilisation selon l'une quelconque des revendications 9 à 13, dans lesquels (a) une ou plusieurs spores fongiques d'un agent biologique ou d'un agent de lutte biologique, et (b) un ou plusieurs agents de germination sont utilisées simultanément, séparément ou successivement, étant entendu éventuellement que :

    (a) une ou plusieurs spores fongiques d'un agent biologique ou d'un agent de lutte biologique, et (b) un ou plusieurs agents de germination sont utilisés simultanément ; et/ou

        (i) le ou lesdits agents de germination comprennent ou consistent en la glycine bétaïne, ladite glycine bétaïne étant appliquée à de la terre ou à l'hôte, à la plante ou à la partie de plante, ou est présente dans la composition à une concentration d'au moins 0,001 %, 0,002 %, 0,003 %, 0,004 %, 0,005 %, 0,006 %, 0,007 %, 0,008 %, 0,009 %, 0,01 %, 0,02 %, 0,03 %, 0,04 %, 0,05 %, 0,06 %, 0,07 %, 0,08 %, 0,09 %, 0,1 %, 0,2 %, 0,3 %, 0,4 %, 0,5 %, 0,6 %, 0,7 %, 0,8 %, 0,9 %, 1 %, 1,5 %, 2 %, 2,5 %, 3 %, 3,5 %, 4 %, 4,5 % ou 5 % ;

        (ii) le ou lesdits agents de germination comprennent ou consistent en un extrait de levure ou une levure inactive, des parois cellulaires de levure, une fraction de paroi cellulaire de levure, un produit de paroi cellulaire de levure ou une combinaison de ceux-ci, lesdits extrait de levure ou levure inactive, parois cellulaires de levure, fraction de paroi cellulaire de levure, produit de paroi cellulaire de levure ou combinaison de ceux-ci étant appliqués à de la terre ou à l'hôte, à la plante ou à la partie de plante ou sont présents dans la composition à une concentration d'au moins 0,001 %, 0,002 %, 0,003 %, 0,004 %, 0,005 %, 0,006 %, 0,007 %, 0,008 %, 0,009 %, 0,01 %, 0,02 %, 0,03 %, 0,04 %, 0,05 %, 0,06 %, 0,07 %, 0,08 %, 0,09 %, 0,1 %, 0,2 %, 0,3 %, 0,4 %, 0,5 %, 0,6 %, 0,7 %, 0,8 %, 0,9 %, 1 %, 1,5 %, 2 %, 2,5 %, 3 %, 3,5 %, 4 %, 4,5 % ou 5 % ; et/ou

        (iii) la ou lesdites spores fongiques d'un agent biologique ou d'un agent de lutte biologique sont appliquées à de la terre ou à l'hôte, à la plante ou à la partie de plante ou sont présentes dans la composition à une concentration d'au moins environ $1\times10^6$, environ $1\times10^7$, environ $1\times10^8$, environ $1\times10^9$, environ $1\times10^{10}$, environ $1\times10^{11}$ ou environ $1\times10^{12}$ UFC/g.

15. Procédé selon l'une quelconque des revendications 1 à 7 et 10 à 14, composition selon l'une quelconque des revendications 8 et 10 à 14, ou utilisation selon l'une quelconque des revendications 9 à 14, dans lesquels :

    (i) la plante ou la partie de plante consiste en des céréales, du maïs, du riz, des graminées, de la canne à sucre, des légumineuses, des plantes fourragères, des plantes riches en huile et en protéines, des plantes potagères, des arbres fruitiers, des plantes viticoles, des plantes urbaines ou des plantes ornementales ;

    (ii) le ou lesdits agents de germination comprennent ou consistent en un extrait de levure, ledit extrait de levure consistant en un extrait de levure soluble ; et/ou

    (iii) le ou lesdits agents de germination comprennent ou consistent en une levure inactive, des parois cellulaires de levure, une fraction de paroi cellulaire de levure, un produit de paroi cellulaire de levure, ou une combinaison de ceux-ci.

FIG. 1

_FIG. 2a_

_FIG. 2b_

FIG. 2c

FIG. 2d

*FIE. 3*

EP 3 962 273 B1

_FIG. 4_

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3467097 A1

- US 2016183537 A

**Non-patent literature cited in the description**

- **CABREFIGA, J. et al.** *Applied and Environmental Microbiology,* 2011, vol. 77 (10), 3174-3181
- **CABREFIGA, J. et al.** *Journal of applied microbiology,* 2014, vol. 117 (4), 1122-1131

- **S. R. COLBY.** Calculating Synergistic and Antagonistic Responses of Herbicide Combinations. *WEEDS,* 1967, vol. 15, 20-22